(19) Europäisches Patentamt
European Patent Office
Office européen des brevets

(11) **EP 4 418 602 B1**

(12) **EUROPEAN PATENT SPECIFICATION**

(45) Date of publication and mention
of the grant of the patent:
**11.03.2026 Bulletin 2026/11**

(21) Application number: **21967269.8**

(22) Date of filing: **10.12.2021**

(51) International Patent Classification (IPC):
**H04J 3/06** (2006.01)

(52) Cooperative Patent Classification (CPC):
**H04J 3/0667; H04J 3/0641**

(86) International application number:
**PCT/JP2021/045608**

(87) International publication number:
**WO 2023/105777 (15.06.2023 Gazette 2023/24)**

(54) **TRANSFER APPARATUS AND TIME SYNCHRONIZATION SYSTEM**

ÜBERTRAGUNGSVORRICHTUNG UND ZEITSYNCHRONISATIONSSYSTEM

DISPOSITIF DE TRANSFERT ET SYSTÈME DE SYNCHRONISATION TEMPORELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.08.2024 Bulletin 2024/34**

(73) Proprietor: **MITSUBISHI ELECTRIC
CORPORATION
Chiyoda-ku
Tokyo 100-8310 (JP)**

(72) Inventors:
• **TANIGUCHI, Sachiko
Tokyo 100-8310 (JP)**
• **MATSUSHITA, Ryuma
Tokyo 100-8310 (JP)**

• **TAJIRI, Yusuke
Tokyo 100-8310 (JP)**

(74) Representative: **Pfenning, Meinig & Partner mbB
Patent- und Rechtsanwälte
Theresienhöhe 11a
80339 München (DE)**

(56) References cited:
EP-A1- 3 703 286     CN-B- 102 158 335
JP-A- 2013 514 688    US-A1- 2014 281 037
US-A1- 2016 149 692   US-A1- 2016 149 692

• JEON YOUNGHWAN ET AL: "An efficient method
of reselecting Grand Master in IEEE 802.1AS",
THE 20TH ASIA-PACIFIC CONFERENCE ON
COMMUNICATION (APCC2014), IEEE, 1 October
2014 (2014-10-01), pages 303 - 308,
XP032765584, DOI: 10.1109/APCC.2014.7091652

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present disclosure relates to a transfer apparatus and a time selection system. Specifically, the present disclosure relates to the transfer apparatus that delivers time information from a time source to each apparatus connected to a network, a time selection method, and a time selection system.

### Background Art

In recent years, integration of a control network and an information network in an industrial Ethernet (registered trademark) network is in progress. In the industrial Ethernet network, standardization of TSN (Time Sensitive Networking) technology as a system to transfer control data in real time is in progress. TSN is technology to schedule traffic by making apparatuses time synchronize highly accurately with one another through a network switch (will be written as transfer apparatus below).

As a type of TSN technology, there is highly accurate network time synchronization technology.

Each piece of equipment linked to a network including the transfer apparatus periodically measures a propagation delay and a clock deviation between adjacent apparatuses. And, in each piece of equipment above, a method to synchronize time highly accurately with regard to time information periodically delivered from a grandmaster clock apparatus (will be written as GM below) that is to be a time source through a network is standardized (for example, Non-Patent Literature 1).

In Non-Patent Literature 1, a plurality of time sources are arranged in a network for a purpose of making a time synchronization system highly reliable. The plurality of time sources arranged periodically deliver time source information such as accuracy and reliability of a clock.

A method is standardized in which the transfer apparatus selects best time source information from time source information received from a single or a plurality of ports, and configures a route to deliver time (clock tree) with the best time source information as a starting point by algorithm BMCA (Best Master Clock Algorithm) periodically delivered.

An original method in which time is synchronized by storing time source information and time information in a same frame is also proposed (for example, Patent Literature 1).

JEON YOUNGHWAN ET AL: "An efficient method of reselecting Grand Master in IEEE 802.1AS", THE 20TH ASIA-PACIFIC CONFERENCE ON COMMUNICATION (APCC2014), IEEE, 1 October 2014 (2014-10-01), pages 303-308, XP032765584 discloses a method for reselecting the Grand Master (GM) in IEEE 802.1AS networks, which is designed to decrease network traffic and reduce the time required for GM reconfiguration compared to the traditional BMCA procedure.

CN102158335 B discloses a method and device for processing a time synchronization port. The method comprises the following steps: determining a protected mode of the port in accordance with port information, wherein the port information comprises the conditions that the port receives notification messages as well as the existing working state and position of the port in a time synchronization network, and the protected mode is one mode selected from a time loop circuit mode, an edge port mode and a master time node mode; and processing the port in accordance with the determined protected mode so as to keep the topological structure of the time synchronization network unchanged. According to the invention, the stability of a system is improved, and the processing capacity of the system is improved.

US2016149692A1 discloses a method for providing time synchronization in a node connected to an Audio Video Bridging (AVB) Ethernet communication network includes steps of receiving static announcement messages from adjacent nodes and constituting a static grandmaster table, reselecting a grandmaster with reference to the static grandmaster table when a synchronization message timer expires, and updating the static grandmaster table according to reselection of the grandmaster.

EP3703286A1 discloses a method and device are disclosed. In an embodiment, a method for synchronizing a slave clock in a Time Sensitive Network (TSN) that includes multiple Precision Time Protocol (PTP) clock domains is disclosed. The method involves determining parameters related to multiple PTP clock domains, assigning domain-specific weights to the multiple PTP clock domains based on the determined parameters, generating a control signal for a clock parameter using the domain-specific weights assigned to the multiple PTP clock domains, and adjusting the clock parameter of a slave clock in response to the control signal.

### Citation List

### Patent Literature

Patent Literature 1: JP 2015-216438 A

**Non-Patent Literature**

Non-Patent Literature 1: IEEE Std 802.1AS-2020 (Timing and Synchronization for Time-Sensitive Applications), Approved 30 January 2020

**Summary of Invention**

**Technical Problem**

In conventional Non-Patent Literature 1, a GM periodically delivers the time source information by an Announce message. In each transfer apparatus, a port that received time source information with best time accuracy among Announce messages received, that is, time source information of good quality, is selected as a slave port. Each transfer apparatus transfers an Announce message received from the slave port to a different port. Transfer timing of transfer of the Announce message to the different port is a cycle managed individually by the transfer apparatus.

On the other hand, the GM periodically delivers time information by a Sync/Follow up message. Each transfer apparatus transfers the Sync/Follow up message while updating in real time, propagation delay time and a clock ratio between the transfer apparatus and the GM, included in the Sync/Follow up message. Here, the propagation delay time included in the Sync/Follow up message is transfer delay time from the GM to a transfer apparatus that received the Sync/Follow up message. The clock ratio between the transfer apparatus and the GM is a ratio of frequency deviations. To calculate the propagation delay time between the transfer apparatus and the GM and the clock ratio between the transfer apparatus and the GM, in each apparatus, a Pdelay_Req message, a Pdelay_Resp message, and a Pdelay_Resp_Follow_up message are transmitted to and received from the adjacent apparatus, and propagation delay time and a clock ratio between the adjacent apparatus and the apparatus are measured. Residence time inside the apparatus is measured.

Transmission cycles of the Announce message and the Sync/Follow_up message are independent of one another. Transfer methods with regard to the Announce message and the Sync/Follow_up message differ in each transfer apparatus. Because of the above, there are many steps removed of the transfer apparatus, the GM that is to be the time source is made redundant, and there has been an issue such as below in a time synchronization system in which a plurality of GMs are connected to the network. That is, when quality of time worsens such as a reception state of a GPS antenna, connected to a GM selected as a master apparatus and that receives the time information, becomes a holdover state or an asynchronous state from a synchronous state, or becomes an asynchronous state from a holdover state, there is a case where the master apparatus is switched to a different GM that is made redundant. As described, there has been an issue where detection of deterioration in the time source information took time and a reconfiguration of the clock tree became delayed at a time when a switch to a different GM occurs.

Patent Literature 1 is a proposal to solve the issue above, and Patent Literature 1 is considered to have an advantage in which by transferring a frame in which the time source information and the time information are integrated, worsening of synchronization accuracy is prevented. In Patent Literature 1, however, there has been an issue in terms of interconnectivity and scalability because a standard is not conformed to.

The present disclosure aims to improve reliability and synchronization accuracy in time synchronization by matching time source information and time information and making notifying of deterioration information on a time source and delivery of new time information faster while ensuring interconnectivity and scalability.

**Solution to Problem**

The invention is defined in the appended set of claims.

**Advantageous Effects of Invention**

According to the present disclosure, a transfer apparatus and a time selection system that attempt to improve reliability and synchronization accuracy in time synchronization by matching time source information and time information and making notifying of deterioration information on a time source and delivery of new time information faster while ensuring interconnectivity and scalability can be provided.

**Brief Description of Drawings**

Fig. 1 is a diagram of Embodiment 1, and a diagram illustrating a hardware configuration of a transfer apparatus.
Fig. 2 is a diagram of Embodiment 1, and a functional configuration diagram relating to a frame process for time synchronization when the transfer apparatus achieves the time synchronization through a network.

Fig. 3 is a diagram of Embodiment 1, and a diagram illustrating content of each piece of output information.

Fig. 4 is a diagram of Embodiment 1, and a diagram illustrating a format of a PTP frame to be used in gPTP.

Fig. 5 is a diagram of Embodiment 1, and a flowchart that illustrates operation of an Announce message reception process when an Announce frame is received.

Fig. 6 is a diagram of Embodiment 1, and a diagram illustrating elements of a priority vector in order of priority.

Fig. 7 is a diagram of Embodiment 1, and a flowchart illustrating operation of a case where a Sync/Follow_up message is received.

Fig. 8 is a diagram of Embodiment 2, and a diagram illustrating a system configuration of a time selection system.

Fig. 9 is a diagram of Embodiment 2, and a diagram illustrating a case where a failure occurred in the time selection system.

Fig. 10 is a diagram of Embodiment 2, and a different diagram illustrating a case where a failure occurred in the time selection system.

Fig. 11 is a diagram of Embodiment 2, and a diagram describing a case where master apparatuses switch.

Fig. 12 is a diagram of Embodiment 2, and a diagram illustrating, in a transition period where a clock tree is reconfigured, the farther away from the master apparatus, the more deviation in reliability of time that synchronizes with a state of an actual time source occurs.

Fig. 13 is a diagram of Embodiment 3, and a diagram illustrating a state when a delivery interval of an Announce message becomes less than or equal to a value obtained by dividing a delivery interval of a Sync/Follow_up message by steps removed between GM apparatuses.

**Description of Embodiments**

In the description of the embodiments, and in the drawings, the same reference signs are added to the same elements and corresponding elements.

Descriptions of elements having the same reference signs added will be suitably omitted or simplified.

In the embodiment below, "unit" may be suitably replaced with "circuit", "step", "procedure", "process", or "circuitry".

Embodiment 1.

*** Description of Configuration ***

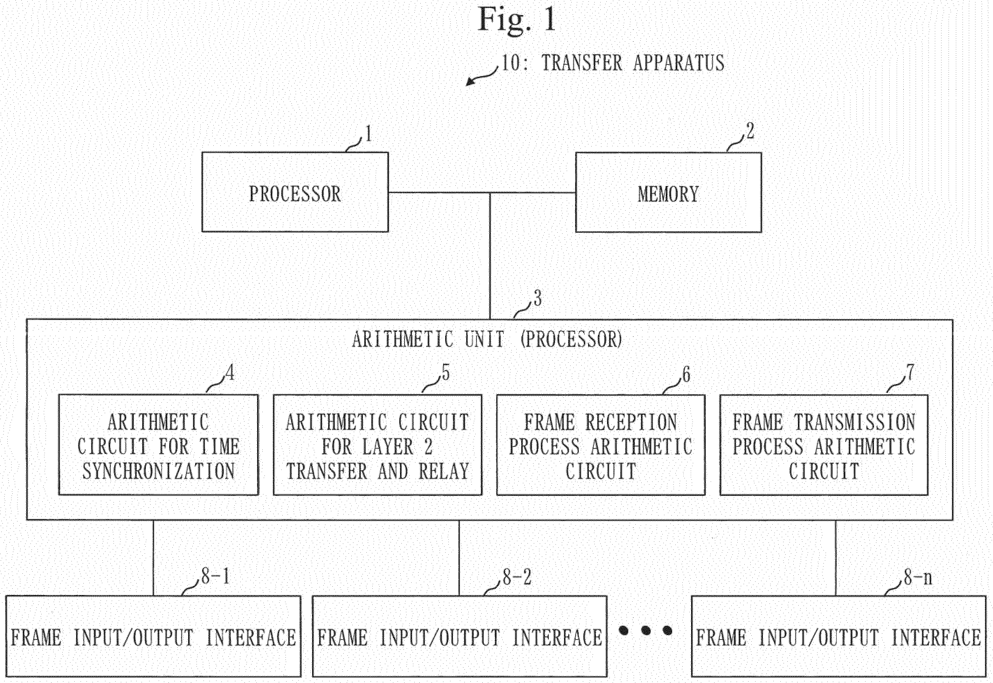

A transfer apparatus 10 of Embodiment 1 will be described by referring to Fig. 1 to Fig. 7.

Fig. 1 is a hardware configuration diagram of the transfer apparatus 10. As illustrated in Fig. 1, the transfer apparatus 10 includes a processor 1, a memory 2, an arithmetic unit 3, and a frame input/output interface 8. The arithmetic unit 3 is enabled by a different processor that differ from the processor 1. Or, one processor may enable the processor 1 and the arithmetic unit 3. The arithmetic unit 3 may be enabled by a circuit of an FPGA.

The arithmetic unit 3 includes an arithmetic circuit for time synchronization 4, an arithmetic circuit for layer 2 transfer and relay 5, a frame reception process arithmetic circuit 6, and a frame transmission process arithmetic circuit 7. Each of the arithmetic circuits of the arithmetic unit 3 will be described.

(Arithmetic circuit for time synchronization 4)

The arithmetic circuit for time synchronization 4 enables functions of a transfer apparatus that is necessary for enabling a highly reliable time selection delivery and time synchronization through a network.

(Arithmetic circuit for layer 2 transfer and relay 5)

The arithmetic circuit for layer 2 transfer and relay 5 has typical layer 2 switch functions. The arithmetic circuit for layer 2 transfer and relay 5 enables a function to relay frames received from a plurality of ports and transfer the frames to an appropriate route. There is a wide range of protocols that the arithmetic circuit for layer 2 transfer and relay 5 implements, but the protocols are not limited in particular. The arithmetic circuit for layer 2 transfer and relay 5 may partially enable functions of a protocol process of layer 3 or a layer higher than layer 3.

(Frame reception process arithmetic circuit 6)

The frame reception process arithmetic circuit 6 performs a reception process, that is typical, of a frame inputted from each port. As the reception process, for example, the frame reception process arithmetic circuit 6 performs, for the frame received in the plurality of ports as a unit, an error check of the frame and discarding of the frame, and identifies a frame class by referring to a header of the frame. To enable the time synchronization, the frame reception process arithmetic circuit 6 also has various functions such as an obtaining function of a reception time stamp of a PTP frame, an identification function of a PTP frame class, and a management function of a reception state of the PTP frame.

(Frame transmission process arithmetic circuit 7)

The frame transmission process arithmetic circuit 7 performs frame transmission processes, that are typical, such as a process to output from a frame with a high priority for each output port, a process to replace an FCS, and the like as processes necessary for transmitting the frame from each port. To enable the time synchronization, the frame transmission process arithmetic circuit 7 also has a generation function of the PTP frame and an obtaining function of a transmission time stamp of the PTP frame.

(Frame input/output interface 8)

The transfer apparatus 10 has a plurality of frame input/output interfaces 8. In Fig. 1, n number of frame input/output interfaces 8 from frame input/output interface 8-1 to frame input/output interface 8-n are illustrated. Each frame input/output interface 8 of the plurality of the frame input/output interfaces 8 is a port. That is, one frame input/output interface 8 is one port. The frame input/output interface 8 is an interface to input/output a frame. An interface that has functions of a PHY in an electrical interface and an SFP in an optical interface may be included in the plurality of the frame input/output interfaces 8.

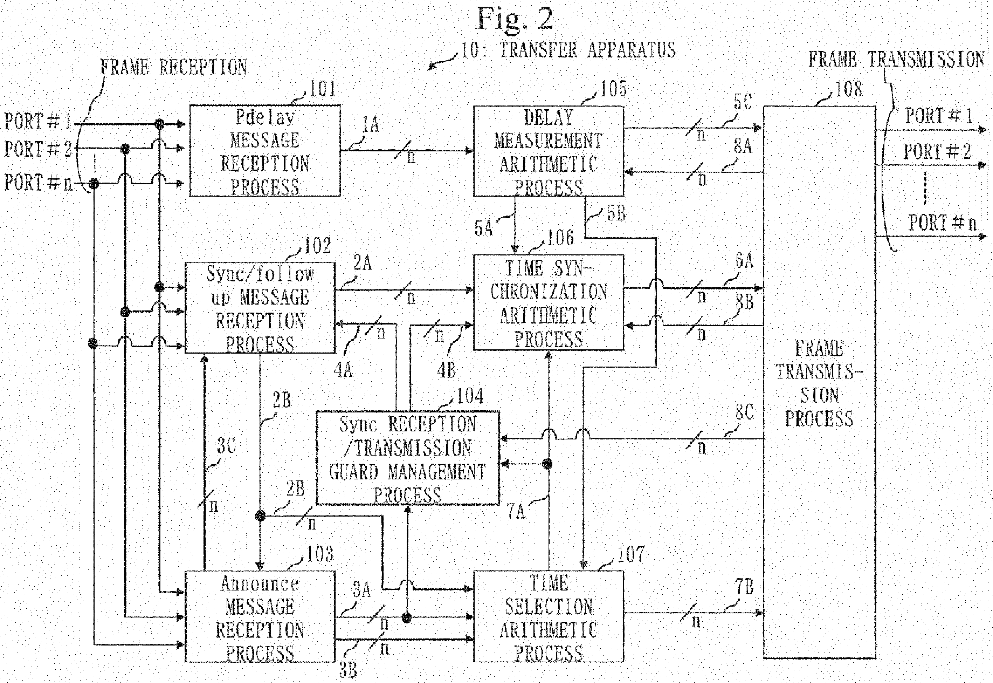

Fig. 2 is a functional configuration diagram relating to a frame process for time synchronization when the transfer apparatus 10 achieves highly accurate time synchronization through the network. In Fig. 2, the transfer apparatus 10 has a Pdelay message reception process 101, a Sync/Follow_up message reception process 102, an Announce message reception process 103, a Sync reception/transmission guard management process 104, a delay measurement arithmetic process 105, a time synchronization arithmetic process 106, a time selection arithmetic process 107, and a frame transmission process 108. Each of the Pdelay message reception process 101 to the frame transmission process 108 outputs output information.

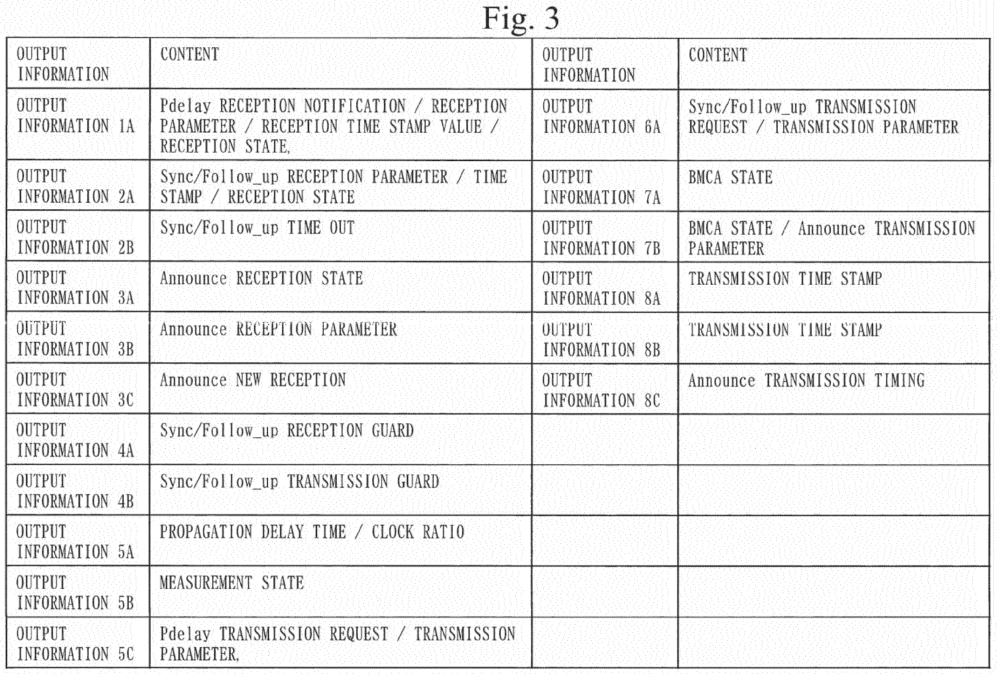

Fig. 3 illustrates content of each piece of output information. The Pdelay message reception process 101 outputs output information 1A. The Sync/Follow_up message reception process 102 outputs output information 2A and 2B. The Announce message reception process 103 outputs output information 3A, 3B, and 3C. The Sync reception/transmission guard management process 104 outputs output information 4A and 4B. The delay measurement arithmetic process 105 outputs output information 5A, 5B, and 5C. The time synchronization arithmetic process 106 outputs output information 6A. The time selection arithmetic process 107 outputs output information 7A and 7B. The frame transmission process 108 outputs output information 8A, 8B, and 8C. Functions of eight processes of the Pdelay message reception process 101 to the frame transmission process 108 are implemented mainly in the arithmetic circuit for time synchronization 4, the frame reception process arithmetic circuit 6, and the frame transmission process arithmetic circuit 7 of Fig. 1. In Fig. 2, processes necessary for enabling time synchronization using a PTP frame for time synchronization such as time selection necessary for time synchronization, time synchronization, a delay measurement, and the like are stated. A way in which a functional block is divided illustrated in Fig. 2 is exemplification, and a way in which a functional block is divided is not limited in particular. A configuration of the functional block is not limited as long as operation of the transfer apparatus 10 is enabled by the functional block.

In Embodiment 1, as an example, description will be given using a PTP frame defined in IEEE802.1AS (gPTP). In the gPTP, a Pdelay_Req message, a Pdelay_Resp message, and a Pdelay_Resp_Follow_up message of a two-step system are used for the delay measurement, a Sync/Follow_up message of a two-step system is used for the time synchronization, and an Announce message is used for notification of time source information. As for a method of the delay measurement, however, the method is not limited in particular. For the time synchronization also, a case of a one-step system is also a target of the transfer apparatus 10, not limited to the two-step system. Not limited to the gPTP, as long as a time synchronization profile is a time synchronization profile that uses a PTP frame of IEEE 1588 or a time synchronization profile that uses a PTP frame of extended IEEE 1588, the time synchronization profile is regarded as a target of the transfer apparatus 10.

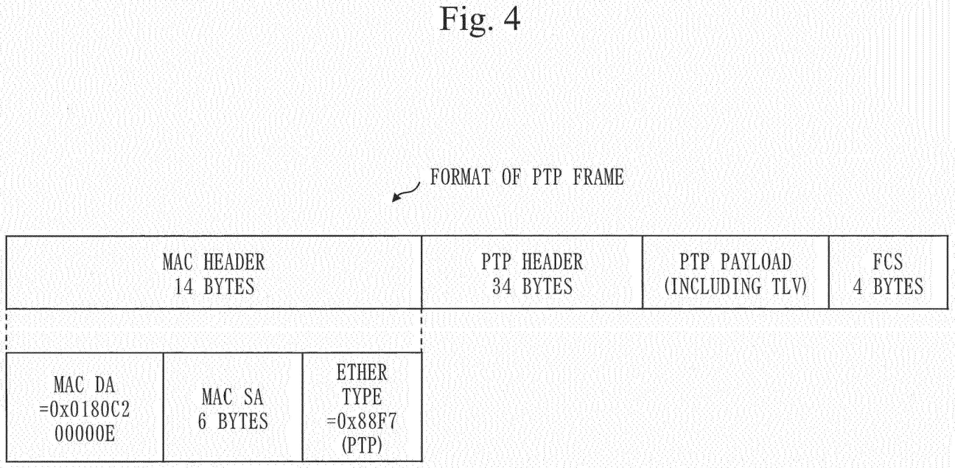

Fig. 4 illustrates an example of a format of the PTP frame used in the gPTP. PTP is handled in layer 2 in Embodiment 1 to Embodiment 3, but in Embodiment 1 to Embodiment 3, a layer higher than or equal to layer 3 is possible to be supported, not limited to layer 2. The transfer apparatus 10 has n number of ports that support the time synchronization. Here, n is an integer more than or equal to 2. As described in the description of Fig. 1, the port is the frame input/output interface 8.

Next, a process of each functional block of Fig. 2 will be described.

(Pdelay message reception process 101)

First, the Pdelay message reception process 101 identifies which message of

(1) a Pdelay_Resp message for a delay measurement of a PTP frame,
(2) a Pdelay_Resp_Follow_up message for a delay measurement of a PTP frame, and
(3) a Pdelay_Req message for a delay response

a message received applies to. The Pdelay message reception process 101 manages a reception state of each message for each port. When receiving these Pdelay messages, the Pdelay message reception process 101 notifies the delay measurement arithmetic process 105 of the Pdelay messages along with information on

(1) a reception port,
(2) a reception parameter (may be an entire message), and
(3) the reception state, and the like.

When receiving the Pdelay_Resp message or the Pdelay_Req message, the Pdelay message reception process 101 obtains a reception time stamp from the message and notifies the delay measurement arithmetic process 105 of a subsequent stage along with other information.

(Delay measurement arithmetic process 105)

The delay measurement arithmetic process 105 accepts the output information 1A from the Pdelay message reception process 101. The output information 1A is Pdelay reception notification. The delay measurement arithmetic process 105 performs processes of a delay measurement and a delay response based on a reception time stamp value, the reception parameter, and the reception state of each port included in the output information 1A. In the delay measurement, the delay measurement arithmetic process 105 periodically outputs to the frame transmission process 108, a Pdelay transmission request of a Pdelay_Req message to an adjacent apparatus for each port along with a necessary transmission parameter as output information 5C.

Then, the delay measurement arithmetic process 105 obtains a transmission time stamp as the output information 8A at a time of Pdelay_Req message transmission from the frame transmission process 108, and retains this transmission time stamp.

The delay measurement arithmetic process 105 performs processes below in a case where there is Pdelay reception notification from the Pdelay message reception process 101 of a Pdelay_Resp message and the Pdelay_Resp_Follow_up message that the adjacent apparatus replied as a response to the Pdelay_Req message. The delay measurement arithmetic process 105 calculates propagation delay time between the adjacent apparatus and the transfer apparatus 10 that is the transfer apparatus 10 based on a reception time stamp of the Pdelay_Req obtained in the adjacent apparatus and stored in each message, a transmission time stamp value of the Pdelay_Resp obtained in the adjacent apparatus, a reception time stamp value of the Pdelay_Resp obtained in the Pdelay message reception process 101, and a transmission time stamp value retained at the time of Pdelay_Req transmission obtained in the frame transmission process 108. The delay measurement arithmetic process 105 executes the delay measurement multiple times and calculates a clock ratio between the adjacent apparatus and the transfer apparatus 10. Here, the clock ratio is a frequency deviation. Based on these calculation results of the propagation delay time and the frequency deviation, and based on a state of transmission and reception of the Pdelay message to and from the adjacent apparatus, the delay measurement arithmetic process 105 verifies whether or not the time synchronization by the gPTP is possible for each port, and with a verification result as a measurement state, notifies the time selection arithmetic process 107. The measurement state is the output information 5B. In the delay response, the delay measurement arithmetic process 105 performs processes below when receiving notification of the Pdelay_Req message having been received in each port from the Pdelay message reception process 101. To respond with the reception time stamp value obtained at the time of reception, the reception parameter (may be the entire message), and information on a target port as the Pdelay_Resp message, the delay measurement arithmetic process 105 outputs a transmission request of the Pdelay_Resp message as the output information 5C to the frame transmission process 108. In a case where a transmission time stamp of the Pdelay_Resp message is obtained as the output information 8A from the frame transmission process 108, the delay measurement arithmetic process 105 outputs a transmission request of the Pdelay_Resp_Follow_up message along with the transmission time stamp as the output information 5C to the frame transmission process 108.

(Sync/Follow _up message reception process 102)

Next, the Sync/Follow_up message reception process 102 identifies the Sync/Follow_up message 51 for time synchronization of the PTP frame and manages a reception state of each message for each port. When receiving a Sync/Follow_up message 51, the Sync/Follow_up message reception process 102 obtains a reception time stamp of a Sync message and retains the reception time stamp of the Sync message along with information on a reception port, a reception parameter (may be an entire message), a reception state, and the like. At timing of receiving a Follow_up message from a same port, the Sync/Follow_up message reception process 102 notifies the time synchronization arithmetic process 106 along with a reception parameter (may be an entire message) of the Follow_up message.

The Sync/Follow_up message reception process 102 updates, for each reception port, time when N times (an integer value set beforehand) a transmission interval stored in the Sync/Follow_up message 51 has passed since reception time of Follow_up message, as time out time. And, in a case where the Sync/Follow_up message reception process 102 did not receive a next Sync/Follow_up message 51 even after the time out time updated has passed, the Sync/Follow_up message reception process 102 detects a time out of the Sync/Follow_up message 51. Detection of the time out of the Sync/Follow_up message 51 may be in a method where the time out is detected in a case where, using a counter that is possible to measure N times the transmission interval, the Sync/Follow_up message 51 is not received by expiration of the counter since receiving the Sync/Follow_up message 51 previously.

Information on existence or non-existence of time out occurrence of the Sync/Follow_up message 51 is used in the Announce message reception process 103, the Sync reception/transmission guard management process 104, and the time selection arithmetic process 107. In a case where a reception guard instruction of the Sync/Follow_up message 51 on a port by port basis is received from the Sync reception/transmission guard management process 104 as the output information 4A, the Sync/Follow_up message reception process 102 executes processes below. That is, the Sync/Follow_up message reception process 102 does not update the time out time or clear the counter even when receiving the Sync/Follow_up message 51 in a port of a guard target, and as operation equivalent to a case where the Sync/Follow_up message 51 is not received, discards the Sync/Follow_up message 51, and does not notify the time synchronization arithmetic process 106 of Sync/Follow_up message reception, the Sync/Follow_up message being the output information 2A.

(Announce message reception process 103)

The Announce message reception process 103 identifies an Announce message 61 for time source notification of the PTP frame, and manages a reception state for each port.

*** Description of Operation ***

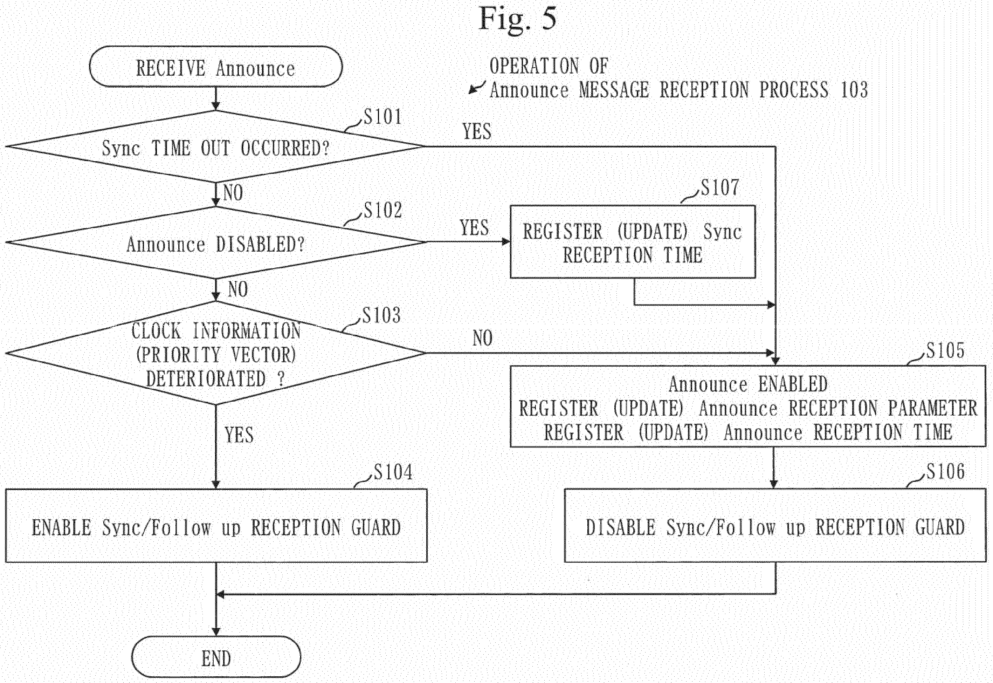

Fig. 5 is a flowchart that illustrates operation of the Announce message reception process 103 when the Announce message 61 is received. In step S101, in a case where a Sync time out has not occurred (no at step S101), the process proceeds to step S102. In a case where an Announce reception state is disabled (yes at step S102), the process proceeds to step S107 and S105. In step S107, when the Announce message reception process 103 newly receives the Announce message 61 at a port where the Announce reception state is disabled, the Announce message reception process 103 registers (updates) Sync reception time. In step S105, when the Announce message reception process 103 newly receives the Announce message 61 at a port where the Announce reception state is disabled, the Announce reception state of the target port becomes enabled (new reception). Then, the Announce message reception process 103 retains priority information of a time source stored in the Announce message 61. In a case where the reception state of the Announce is enabled (no at step S102), the process proceeds to step S103. In step S103, when the Announce message reception process 103 newly receives the Announce message, the Announce message reception process 103 compares priority information of a time source received with priority information previously retained in a same port. The Announce message reception process 103, in a case where the priority information received this time is a same as the previous priority information (matched reception) or is information of a high priority (priority reception) (no at step S103), the process proceeds to step S105. The Announce message reception process 103 retains (updates) a reception parameter (may be an entire message) of the Announce message 61 newly received (step S105), and notifies the time selection arithmetic process 107 of the reception parameter as the output information 3B along with information on the reception port.

In step S103, in a case where the priority of the priority information received this time is lower than the priority of the priority information retained previously, the Announce message reception process 103 determines that a priority of the Announce message 61 deteriorated (deteriorated reception) (yes at step S103), and the process proceeds to step S104. In step S104, the Announce message reception process 103 does not retain the reception parameter, and notifies the Sync reception/transmission guard management process 104 that the priority of the Announce message 61 is in a deteriorated state along with the information on the reception port as the output information 3A. In a case where the Announce message 61 is not received for more than or equal to a certain period of time for each port or in a case where a deteriorated state continues for more than or equal to a certain period of time, the Announce message reception process 103 detects an Announce time out. In a state where the Announce time out is occurring, the Announce message reception process 103 regards the reception state of the Announce message of the target port as disabled.

(Announce time out detection method)

A specific Announce time out detection method that the Announce message reception process 103 executes will be described below. The Announce message reception process 103 updates, for each reception port, time when M times (an integer value set beforehand) a transmission interval stored in the Announce message 61 has passed since reception time when the reception parameter of the Announce message 61 was retained, as the time out time. And, in a case where a next Announce message is not received even after the time out time updated has passed, the Announce message reception process 103 detects a time out of the Announce message 61. A counter that is possible to measure M times the transmission interval can be used for time out detection of the Announce message 61. The detection may be in a method where the Announce message reception process 103 detects the time out in a case where the Announce message 61 is not received by time expiration of the counter since receiving the Announce message 61 previously.

In a case where a Sync/Follow_up time out is detected from the Sync/Follow_up message reception process 102 based on the output information 2B, the Announce message reception process 103 disables the Announce message reception state of the target port at timing when the Sync/Follow_up time out occurred (time out undetected $\Rightarrow$ detect).

The Announce message reception process 103 outputs information on enablement or disablement of the Announce to the Sync reception/transmission guard management process 104 and the time selection arithmetic process 107 as the output information 3A.

(Time selection arithmetic process 107)

The time selection arithmetic process 107 executes processes below for all ports that the delay measurement arithmetic process 105 determined that the time synchronization is possible with the apparatus that is the transfer apparatus 10 to which the time selection arithmetic process 107 is installed.

That is, every time "Announce reception state on a port by port basis" that is the output information 3A input by the Announce message reception process 103 changes (Announce state becomes enabled $\Rightarrow$ disabled, disabled $\Rightarrow$ enabled (new reception), enabled $\Rightarrow$ enabled (priority reception)), the time selection arithmetic process 107 selects a port with a highest priority as a "slave port".

(Priority information of Announce message 61)

An example of the priority information of the Announce message 61 will be shown below. In the gPTP, a 224 bit priority vector (will be written below as PV) is defined as the priority information of the Announce message 61.

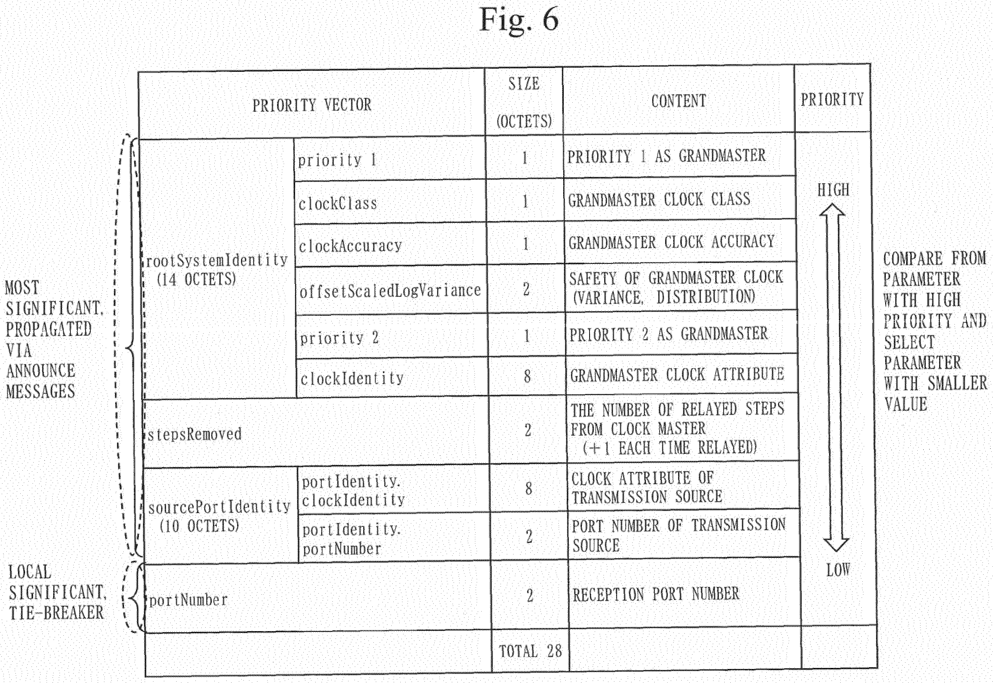

Fig. 6 illustrates elements of the PV in order of priority. As a result of comparing the PVs, it is necessary for all apparatuses within the network to uniquely decide on the time source. Because of the above, the PV uses clockIdentity in which a MAC address of the time source is included in addition to a priority (priority 1 to priority 2) of reliability and the like of the time source. Steps removed (stepsRemoved) of a relay apparatus from the time source, a clock ID and a transmission port number (portIdentity) of an adjacent apparatus of a previous step, a reception port number (portNumber) of the transfer apparatus 10 that is the transfer apparatus 10, and the like are also included in the PV. BMCA (Best Master Clock Algorithm) will be described. The BMCA is an algorithm that compares a PV of the transfer apparatus 10 that is the transfer apparatus 10 with PVs of all ports, selects a best master clock, and decides on a state of all ports of the transfer apparatus 10 that is the transfer apparatus 10.

(Description of BMCA)

First, a port of which the time synchronization is determined as not possible for some reason in the delay measurement arithmetic process 105 is regarded as a "disabled port" and does not transmit or receive the Announce message and the Sync/Follow_up message necessary for the time synchronization. Next, a port in which the Announce is disabled or the Sync/Follow_up time out is occurring is regarded as a "master port". The master port is a port that transfers a reception parameter of an Announce message received from a slave port and the Sync/Follow_up message. Next, for a port in which the Announce is enabled and the Sync/Follow_up time out is not occurring, a value of which 1 is added to the PV (steps removed (stepsRemoved) of RxPV received in each port of each port is compared with the PV (stepsRemoved = 0, clockIdentity = portIdentity, portNumber = 0) of the transfer apparatus 10 that is the transfer apparatus 10.

As a result of comparing each reception port with the transfer apparatus 10 that is the transfer apparatus 10 as a whole, the time selection arithmetic process 107 regards a port (or the transfer apparatus 10 that is the transfer apparatus 10) that received an Announce message of a value that is smallest (highest priority) as the "slave port". The time selection arithmetic process 107 selects as a master apparatus, a time source (or an apparatus that is the apparatus) of the Announce message received in the slave port. In ring and mesh networks, there is also a case where the Announce message that regards the master apparatus as the time source is received in a plurality of ports other than the slave port. Also taking such a case into consideration, in a case where the slave port, and rootSystemPriority and steps removed of Fig. 4 are of a same value, or in a case where the slave port and the rootSystemPriority are of a same value and the steps removed is larger than the slave port by 1 and a clock ID of the adjacent apparatus is smaller than a clock ID of the transfer apparatus 10 that is the transfer apparatus 10, the time selection arithmetic process 107 regards the port as a "passive port" and other ports as "master ports". The passive port is regarded as a port that does not transfer the Announce message or the Sync/Follow_up message received from the slave port. The state of each port that is decided on by the BMCA is notified to the Sync reception/transmission guard management process 104, the time synchronization arithmetic process 106, and the frame transmission process 108.

(Sync reception/transmission guard management process 104)

In the Sync reception/transmission guard management process 104, Announce transmission timing that is the output information 8C, the Announce message to each master port (slave apparatus) from the frame transmission process 108, and a change in the reception state of the Announce message of each port from the time selection arithmetic process 107 after transmission are managed, and reception and transmission of the Sync/Follow_up message are guarded under conditions below.

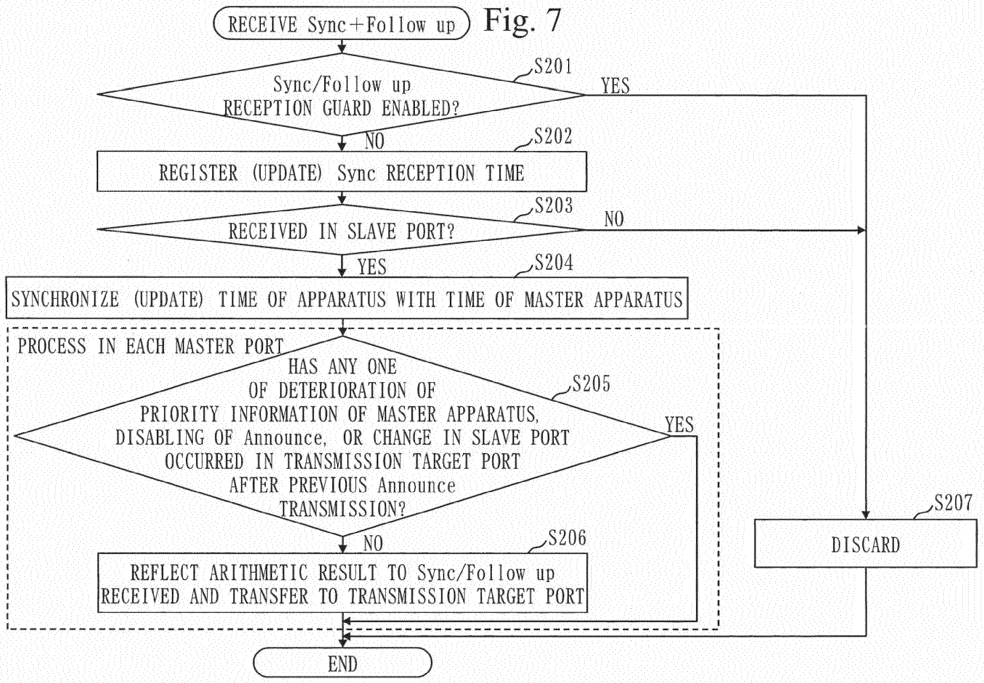

Fig. 7 is a flowchart illustrating operation of a case where the Sync/Follow_up message is received. In a case where the Announce to be received in the slave port deteriorated (deteriorating) (step S 103), in the BMCA, a state of the BMCA is decided on based on a PV value before deterioration. Because of the above, the Sync reception/transmission guard management process 104 outputs as the output information 4A (step S104), an instruction to guard the reception of the Sync/Follow_up message to the Sync/Follow_up message reception process 102 until the deteriorated state is resolved (disabled by the Announce time out by deterioration continuation or improved to a state before the deterioration) (step S106), in a way that the Sync/Follow_up message received in the slave port will not be received. The Sync reception/transmission guard management process 104 retains a state of the Announce of the slave port at a time of transmitting a latest Announce message and PV for every master port. In a case where the Announce of the slave port retained is disabled or the slave port is changed (yes at step S205), the Sync reception/transmission guard management process 104 outputs as the output information 4B, an instruction to guard the transmission to the time synchronization arithmetic process 106 in a way that the Sync/Follow_up message is not delivered until a new Announce message after the change is transmitted for each master port. To have the Sync/Follow_up correspond to the time source information of the Announce, in each master port, the Sync/Follow_up message from a new slave port is assumed to be transmitted after transmission by the master port of the new Announce message received in the slave port.

(Time synchronization arithmetic process 106)

In the time synchronization arithmetic process 106, in a case where there is reception notification of the Sync/Follow_up message as the output information 2A from the Sync/Follow_up message reception process 102, and a reception port of the Sync/Follow_up message is the slave port selected by the BMCA of the time selection arithmetic process 107 (yes at step S203), a process to deliver time to the master port and a process to make time of the transfer apparatus 10 that is the transfer apparatus 10 to synchronize with time of the master apparatus are performed (step S204).

First, the process to the deliver the time by the time synchronization arithmetic process 106 will be described. When the slave port receives the Sync/Follow_up message (yes at step S203), the time synchronization arithmetic process 106 outputs a transmission request of the Sync message and a reception parameter (the message may be in a present condition) of the Sync (step S206) as the output information 6A to the frame transmission process 108 for a master port to which there is no transmission guard instruction from the Sync reception/transmission guard management process 104 (no at step S205).

The transmission guard instruction from the Sync reception/transmission guard management process 104 is the output information 3B. From the frame transmission process 108, a transmission time stamp value obtained when each master port transmitted the Sync message is inputted to the delay measurement arithmetic process 105 and the time synchronization arithmetic process 106 as the output information 8A and 8B.

The time synchronization arithmetic process 106 calculates as residence time of the transfer apparatus 10 that is the transfer apparatus 10, a value that is a time difference between a Sync transmission time stamp from the frame transmission process 108 and a Sync reception time stamp from the Sync/Follow_up message reception process 102 adjusted by a clock ratio between the master apparatus and the transfer apparatus 10 that is the transfer apparatus 10.

Here, the clock ratio is a value calculated based on a normalized value of a clock ratio between the delay measurement arithmetic process 105, the master apparatus of the Follow_up message received, and a previous step apparatus.

The time synchronization arithmetic process 106 adds a value that is the residence time of the transfer apparatus 10 that is the transfer apparatus 10 and the propagation delay time calculated in the delay measurement arithmetic process 105 added to the propagation delay time from the master apparatus of the Follow_up message received to the previous step apparatus.

The time synchronization arithmetic process 106 calculates a clock ratio of the transfer apparatus 10 that is the transfer apparatus 10 to the master apparatus based on the clock ratio (frequency deviation) between the adjacent apparatus calculated in the delay measurement arithmetic process 105 and the transfer apparatus 10 that is the transfer apparatus 10, and a normalized value of a clock ratio of the previous step apparatus to the master apparatus stored in the Follow_up message received. Then, the time synchronization arithmetic process 106 changes the clock ratio calculated to a normalized value. Furthermore, the time synchronization arithmetic process 106 outputs to the frame transmission process 108 these parameters together with the Follow_up message received as a transmission parameter along with a transmission request of the Follow_up message. Output of the time synchronization arithmetic process 106 here is the output information 6A. In a case where the transfer apparatus 10 that is the transfer apparatus 10 is selected as the master apparatus (slave port), the time synchronization arithmetic process 106 generates timing of transmitting the Sync message of the transfer apparatus 10 that is the transfer apparatus 10 in a cycle set beforehand, and periodically outputs a transmission request of the Sync/Follow_up message to the frame transmission process 108 as the output information 3A.

The time synchronization arithmetic process 106 retains a frequency deviation adjustment value from the port that was operating as the master apparatus last, and notifies the frame transmission process 108 together with time managed in the transfer apparatus 10 that is the transfer apparatus 10 as a transmission parameter of the Sync/Follow_up message. This notification is the output information 6A.

The time synchronization arithmetic process 106 manages the time of the transfer apparatus 10 that is the transfer apparatus 10. The time synchronization arithmetic process 106 updates, at the time of reception of the Sync/Follow_up message, time of which the propagation delay time to the previous step apparatus, the propagation delay time from the previous step apparatus to the transfer apparatus 10 that is the transfer apparatus 10, and delay time until a process when the time of the transfer apparatus 10 that is the transfer apparatus 10 is updated based on the Sync message are added to the time when the Sync message is delivered from the master apparatus, to the time of the transfer apparatus 10 that is the transfer apparatus 10.

With this update, the time synchronization arithmetic process 106 causes the time of the transfer apparatus 10 that is the transfer apparatus 10 to synchronize with the time of the master apparatus. The time of the transfer apparatus 10 that is the transfer apparatus 10 is always adjusted and managed by a Follow_up message received last and the clock ratio between the master apparatus and the transfer apparatus 10 that is the transfer apparatus 10.

(Frame transmission process 108)

In the frame transmission process 108, various types of PTP messages to be transmitted are generated and the various types of PTP messages are outputted as a PTP frame. The frame transmission process 108 outputs a Pdelay_Req message 43 for delay measurement in a transmission cycle set for each port. At a time of transmitting the Pdelay_Req message 43, the frame transmission process 108 obtains a transmission time stamp to be used for delay calculation and notifies the delay measurement arithmetic process 105 of the transmission time stamp as the output information 8A. As for a Pdelay_Resp message 41, the frame transmission process 108 generates a frame based on the Pdelay_Resp transmission request to each port, the Pdelay_Resp transmission request being the output information 5C from the delay measurement arithmetic process 105, the reception time stamp of the Pdelay_Req, and information on a reception parameter, and transmits the frame to the target port.

The frame transmission process 108 obtains the transmission time stamp to be used for the delay calculation at a time of transmitting the Pdelay_Resp message 41. After transmission of the Pdelay_Resp message 41, the frame transmission process 108 generates a Pdelay_Resp_Follow_up message 42 that has stored information on the transmission time stamp of the Pdelay_Resp message 41 and transmits the Pdelay_Resp_Follow_up message 42 following generation. The frame transmission process 108 generates the Sync message. The Sync message that notifies of time information generates a frame based on a transmission request and a transmission parameter of each port from the time synchronization arithmetic process 106, and transmits the frame to the target port. The transmission request and the transmission parameter of each port from the time synchronization arithmetic process 106 are the output information 6A. The frame transmission process 108 obtains the transmission time stamp to be used for the delay calculation at a time of transmitting the Sync message, and notifies the time synchronization arithmetic process 106 of the transmission time stamp as the output information 8B. As for the Sync/Follow_up message 51, the frame transmission process 108 generates a frame based on the transmission request and the transmission parameter of each port, and transmits the frame to the target port. As for the Announce message 61 that notifies of the time source information, the frame transmission process 108 assigns necessary information (for example, an ID and a transmission port number of the transfer apparatus 10 that is the transfer apparatus 10) to the Announce message 61 received from the slave port, and periodically transmits the Announce message 61 to the master port in a transmission cycle set for each port. In the frame transmission process 108, the plurality of PTP messages above are multiplexed for each port and transmitted to one port. When transmission requests of the plurality of frames overlapped, the frame transmission process 108 performs priority control. In a case where the frame transmission process 108 also has a layer 2 transfer function, the frame transmission process 108 also multiplexes and transmits a general frame other than the PTP message. To increase synchronization accuracy, however, the frame transmission process 108 transmits giving priority to the PTP frame in a way to reduce residence time of the PTP frame (especially the Sync/Follow_up message 51). To make switching time of the master apparatus high speed, the frame transmission process 108 transmits giving priority to the Announce message 61.

*** Description of Effect of Embodiment 1. ***

In Embodiment 1, a configuration and operation of a transfer apparatus of a time synchronization system has been described. In Embodiment 1, the reception state of the Announce message 61 that notifies of the time source information is monitored for each port. And, the Sync/Follow_up message 51 for the time synchronization is made so as not to be transferred in a case where, based on monitoring, a state of the time source (reliability of time) worsened, for example when reliability of time is reduced and the like. By the above, the time out of the Sync/Follow_up message 51 is made to occur and all apparatuses capable of time synchronization in the system can be notified of worsening of the time source at high speed.

In Embodiment 1, the state of the Announce is disabled at timing of dispatch of the time out of the Sync/Follow_up message 51, and an Announce that is newly received is accepted. By the above, the time source can be switched at high speed.

In Embodiment 1, in a case where the state of the time source (reliability of time) worsened or the slave port switched, the Sync/Follow_up message 51 is delivered after time source information on a new slave is delivered in the Announce message 61. By the above, the information on the time source and the time information match and a time synchronization system that is stable can be provided.

Unlike the technology in Patent Literature 1 that has no interconnectivity, the technology disclosed in Embodiment 1 uses the Announce message and the Sync/Follow_up message defined by the PTP and the gPTP. Because of the above, the time selection delivery and the time synchronization described in Embodiment 1 are possible even in a case where a different transfer apparatus conforming to a same standard (time synchronization profile) as the transfer apparatus 10 of Embodiment 1 is applied to a same time synchronization system (housed mixed in the network).

Embodiment 2.

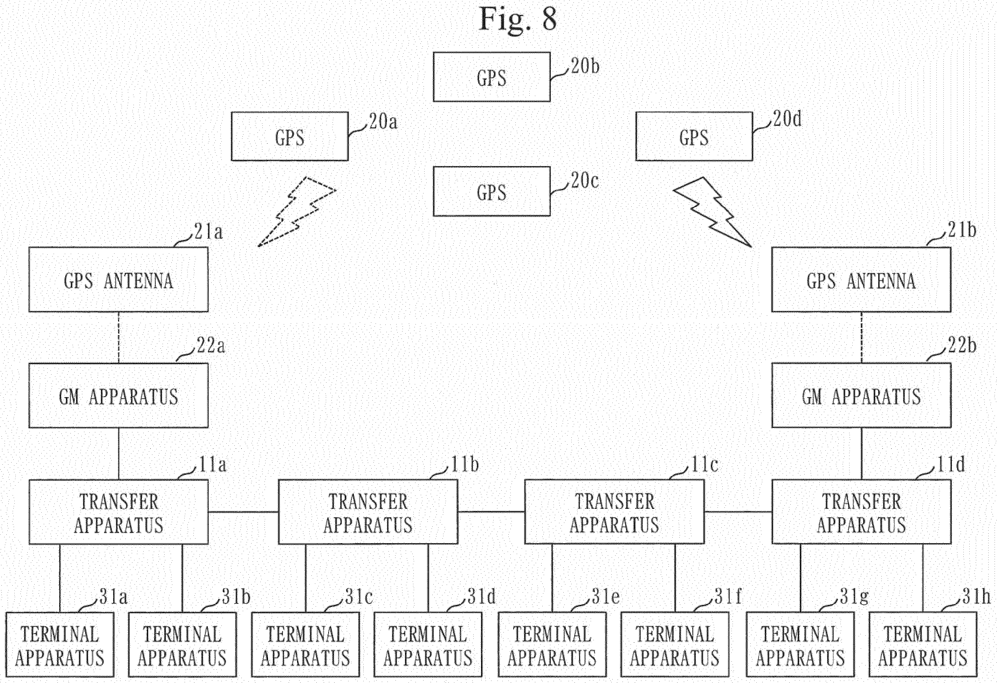

A time synchronization system 70 of Embodiment 2 will be described by referring to Fig. 8 to Fig. 12.

Fig. 8 illustrates a system configuration of the time synchronization system 70 of Embodiment 2. The time synchronization system 70 includes a GM apparatus 22a connected to a GPS antenna 21a, a transfer apparatus 11a connected to the GM apparatus 22a, terminal apparatuses 31a and 31b connected to the transfer apparatus 11a, a transfer apparatus 11b, terminal apparatuses 31c and 31d connected to the transfer apparatus 11b, a transfer apparatus 11c, terminal apparatuses 31e and 31f connected to the transfer apparatus 11c, a transfer apparatus 11d, terminal apparatuses 31g and 31h connected to the transfer apparatus 11d, and a GM apparatus 22b that is arranged for redundancy of the GM apparatus 22a and that is connected to a GPS antenna 21b and the transfer apparatus 11d. The GPS antenna 21a and the GPS antenna 21b receive a positioning signal that GPS satellites 20a, 20b, 20c, and 20d transmits. The positioning signal includes the time information. The GM apparatus 22a and the GM apparatus 22b are grandmaster apparatuses. GM is an abbreviation for grandmaster. Between the GM apparatus and the transfer apparatus, between the transfer apparatuses, and between the transfer apparatus and the terminal apparatus are each connected through communication lines that are possible to transfer an Ethernet frame.

The time synchronization system 70, as a first variation, may be in a configuration that does not use the GPS satellite 20a to the GPS satellite 20d and in which there are no GPS antennas 21a and 21b. The time synchronization system 70, as a second variation, may be in a configuration that does not use the GPS satellite 20a to the GPS satellite 20d, there are no GPS antennas 21a and 21b, and in which the GM apparatuses 22a and 22b are not connected. In a case of the second variation, any one of the transfer apparatuses becomes the master apparatus that is the time source instead of the GM apparatus.

In Fig. 8, four transfer apparatuses 11a, 11b, 11c, and 11d are connected in a form of a line. There is, however, no restriction on the number of transfer apparatuses that configure the time synchronization system 70, and there is no restriction on a connection configuration either. The connection configuration may be a connection of a ladder type, a ring type, a star type, a mesh type, or a mix of more than or equal to two or three of these, not limited to a line form. In Fig. 8, the GPS antennas 21a and 21b are receiving positioning signals of four GPS satellites. There is no restriction on the number of GPS satellites from which positioning signals are received. In Fig. 8, the GM apparatus 22a that has the GPS antenna 21a and the GM apparatus 22b that has the GPS antenna 21b are respectively connected to the transfer apparatuses 11a and 11d that are farthest. The GM apparatus 22a and the GM apparatus 22b, however, may be connected to any one of the transfer apparatuses of the time synchronization system 70 connected through lines.

In Fig. 8, there are two GM apparatuses. There is, however, no restriction on the number of GMs that configure the time synchronization system 70. There is no restriction on the number of ports on the GM apparatus either.

In Fig. 8, the transfer apparatus is connected to each adjacent apparatus by four ports. The transfer apparatus, however, only needs to have at least two or more ports implemented, and there is no restriction on the number of connection ports.

In Fig. 8, the time synchronization system 70 includes eight terminal apparatuses. The number of terminal apparatuses, however, is not limited. A terminal apparatus that does not have a time synchronization function may be connected. In a port of a transfer apparatus to which the terminal apparatus that does not have the time synchronization function is linked, the port does not have to have the time synchronization function.

Next, a basic mechanism of time synchronization system 70 will be described. In the description below, assume that the GM apparatus, the transfer apparatus, and the terminal apparatus all have implemented the time synchronization function.

(Procedure of each apparatus selecting time source)

First, the procedure of each apparatus selecting the time source will be described. Each GM apparatus and each transfer apparatus transmit the Announce message periodically to the adjacent apparatus. The Announce message is a message for time source notification that includes the priority information of the time source such as the time source information that identifies reliability of time to be managed in an own apparatus (accuracy of quality and time) and the own apparatus, and the like. In a case where an Announce message that includes a priority with higher priority information than the own apparatus is received, each GM apparatus and each transfer apparatus stop transmission of the Announce message of the own apparatus. Then, each GM apparatus and each transfer apparatus select a port that received an Announce message with a highest priority in the ports of an own transfer apparatus as a slave port. This transfer apparatus delivers the Announce message received from the slave port selected to a port other than the slave port in a cycle set in each port of the own transfer apparatus.

By the above, an apparatus that transmitted an Announce message with a highest priority in the network is selected as a master apparatus that is to be a time source of all apparatuses in the network. The steps removed of the relay apparatus from the master apparatus to a slave apparatus and also a port number of the apparatus that received the Announce message is included in the priority information. Because of the above, a clock tree that is to be a delivery route of time with one master apparatus as a starting point is formed regardless of a network configuration. All apparatuses other than the master apparatus including the terminal apparatus become slave apparatuses. Here, a transmission cycle of the Announce message of each apparatus may be standardized in the network or may be designated individually for each apparatus or port. Information that indicates a transmission interval is stored in the Announce message. The apparatus that received the Announce message obtains the information on the transmission interval of the Announce message received from the adjacent apparatus. The apparatus that received the Announce message detects a reception time out of the Announce message in the target port in a case where the Announce message is not received for time more than or equal to M times (M is any integer) the transmission interval from reception timing of the Announce message. Since the Announce is disabled in the port in which the reception time out of the Announce message is detected, the port where the reception time out is detected is not selected for the slave port (master apparatus). The GM apparatus and the transfer apparatus themselves operate as the master apparatus until an Announce message that has priority information with a higher priority than the priority of the GM apparatus and the transfer apparatus is newly received.

(Procedure to synchronize time)

Next, the procedure to synchronize time will be described. Each slave apparatus transmits and receives a delay measurement message between an apparatus that is adjacent or between the master apparatus and the own apparatus as a prerequisite for synchronizing time. Each slave apparatus makes the propagation delay time measurable by recording time when the delay measurement message is transmitted and received in a message for delay management or by retaining in the own apparatus. A plurality of time synchronization profiles that derived from IEEE1588 (PTP), a standard that makes highly accurate time synchronization possible, and PTP are standardized. A plurality of measurement methods for propagation delay are defined in various time synchronization profiles. In the present specification, detailed operation with regard to propagation delay measurement is not the operation worthy of mention. A measurement method of the propagation delay time from the master apparatus to the own apparatus, or from the adjacent apparatus to the own apparatus are not particularly limited. To increase the synchronization accuracy, each slave apparatus measures a frequency deviation between the master apparatus and the own apparatus or between the adjacent apparatus and the own apparatus based on information obtained by measuring the propagation delay measurement a plurality of times. By measuring a cycle deviation, it is possible to adjust the propagation delay time and to also adjust a frequency deviation's worth of time between the master apparatus and the own apparatus to the time of the own apparatus. Adjustment may be omitted in the adjustment of the propagation delay time and adjustment of the time of the own apparatus based on the frequency deviation using an oscillator with a low frequency deviation for an operation clock of each apparatus, substituting by applying Sync E, or the like. The Sync message and the Follow_up message may be used in addition to the message for delay measurement in the measurement of the propagation delay time and the frequency deviation of the above.

(Procedure for slave apparatus to synchronize with time of master apparatus)

The procedure for each slave apparatus to synchronize with the time of the master apparatus will be indicated below. The master apparatus periodically delivers a Sync message that has stored information including time managed in the master apparatus. A message that performs the time synchronization is not limited to the Sync message. For example, in the gPTP, a two-step system that delivers the Sync message and the Follow_up message as a set is adopted to more precisely adjust the frequency deviation and to synchronize with high accuracy. In the gPTP, the Follow_up message has stored information that signifies a clock frequency deviation from the master apparatus to the previous step apparatus, and in the gPTP, the time synchronization described above may be in the two-step system.

Hereinafter, description will be given with the two-step system as a premise. The time synchronization system 70, however, is not limited to the two-step system. The slave apparatus that received a Sync/Follow_up message that the master apparatus delivers in the slave port performs processes below. That is, based on Sync delivery time of the master apparatus included in the Sync/Follow_up message, the slave apparatus adds delay time from the master apparatus to the own apparatus and processing time from receiving the Sync message until synchronizing the time in the own apparatus, and makes the time of the own apparatus to synchronize with the time of the master apparatus. Here, the "delay time from the master apparatus to the own apparatus" includes a sum of residence time in each transfer apparatus of up to a previous step that has been passed through and the propagation delay between apparatuses. The transfer apparatus that is the slave apparatus delivers the Sync/Follow_up message received from the slave port to a master port other than the slave port. Information on delivery time of the master apparatus and transfer delay time from the master apparatus until delivery is made from each port of the own apparatus is included in the Sync/Follow_up message to be delivered. Here, "the transfer delay time from the master apparatus until delivery is made from each port of the own apparatus" includes a sum of residence time in the own apparatus and each transfer apparatus that has been passed through. Processes below are performed when each slave apparatus synchronizes with the time of the master apparatus.

Each slave apparatus adds the propagation delay time from the master apparatus to the own apparatus as the time to which the adjustment has been made for a frequency deviation's worth of each slave apparatus with respect to the master apparatus, to the delivery time of the master apparatus stored in the Sync/Follow_up message, and makes the own apparatus synchronize with master time.

Also when managing with a clock of the own apparatus, the time that is synchronized with the time of the master apparatus, the time is managed by time adjusted for a frequency deviation's worth. Information indicating the transmission interval is stored in the Sync/Follow_up message. The slave apparatus obtains the information on the transmission interval of the Sync/Follow_up message delivered from the master apparatus. The slave apparatus detects a reception time out of the Sync/Follow_up message in the target port in a case where the Sync/Follow_up message is not received for time more than or equal to N times (N is any integer) the transmission interval from reception timing of the Sync/Follow_up message. The port where the reception time out of the Sync/Follow_up message is detected will not be selected as a slave port (master apparatus) in the selection of the time source described above.

(Operation in a case where master apparatuses switch)

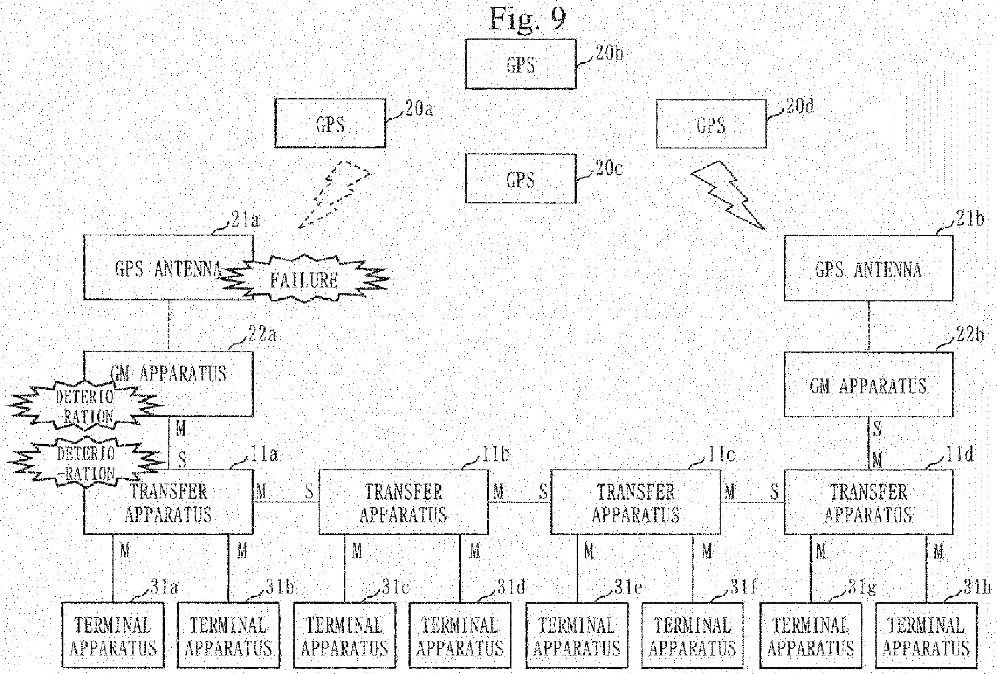

Next, in Embodiment 2, operation in the case where the master apparatuses switch in the apparatuses of the time synchronization system 70 will be described. For example, assume that both of the GPS antennas 21a and 21b are in a state where the time information from the GPS satellite can be obtained with high sensitivity. In this case, assume that an apparatus with highest priority information is the GM apparatus 22a, and an apparatus with second highest priority information is the GM apparatus 22b. Assume that the GM apparatus 22a is selected as the master apparatus beforehand. Incidents such as worsening of a reception state of the GPS antenna 21a, a failure in the GPS antenna 21a, or a cable failure between the GPS antenna 21a and the GM apparatus 22a may occur. In a case where these incidents occurred, priority information of an Announce message to be delivered from the GM apparatus 22a that is selected as the master apparatus deteriorates from a state in which a priority is highest in the system to a state lower than the priority of the GM apparatus 22b. The transfer apparatus 11a that received from the GM apparatus 22a that is the master apparatus before a switch, the Announce message of which the priority information deteriorated, has retained the information of the Announce message with a high priority received before. Therefore, as illustrated in Fig. 9, the transfer apparatus 11a finds that the priority information of the time source of the GM apparatus 22a deteriorated.

Even in a case where the transfer apparatuses 11a, 11b, 11c, and 11d stopped receiving the Announce message or found deterioration of the priority information, the transfer apparatuses 11a, 11b, 11c, and 11d retain the information of the Announce message with the high priority received last for a certain period of time that is designated. This certain period of time that is designated is until time out time of the Announce message. Because of the above, in the transfer apparatus 11a, a state of selecting by the BMCA does not change until "a certain period of time" passes after last reception of the Announce message with the high priority from the GM apparatus 22a. The GM apparatus 22a remains the master apparatus based on the priority information of the Announce message before the deterioration that the transfer apparatus 11a retained. In the transfer apparatus 11a, a port that connects to the GM apparatus 22a remains the slave port.

On the other hand, the transfer apparatus 11a that detected that a time source GM apparatus 22a from the slave port deteriorated performs processes below. In a case where the Sync/Follow_up message from the GM apparatus 22a is received in the slave port, the transfer apparatus 11a guards this reception (not regard as received), and stops time synchronization of the own apparatus and the delivery of the Sync/Follow_up message to a port other than the slave port. In a case where priority information with a priority that is equal to or higher than the priority that has been retained until now is not received before a certain period of time passes (time out of the Announce), the transfer apparatus 11a disables the information of the Announce message with the high priority that had been retained until now. Then, the transfer apparatus 11a accepts and retains the priority information newly received and deteriorated (as new reception).

Since the Sync/Follow_up message from the master apparatus is not received for a certain period of time (until time out time of the Sync/Follow_up message), the transfer apparatuses 11b, 11c, and 11d that are slave apparatuses of the subsequent stage, the terminal apparatuses 31a, 31b, 31c, 31d, 31e, 31f, 31g, and 31h, and the GM apparatus 22b detect the time out of the Sync/Follow_up message.

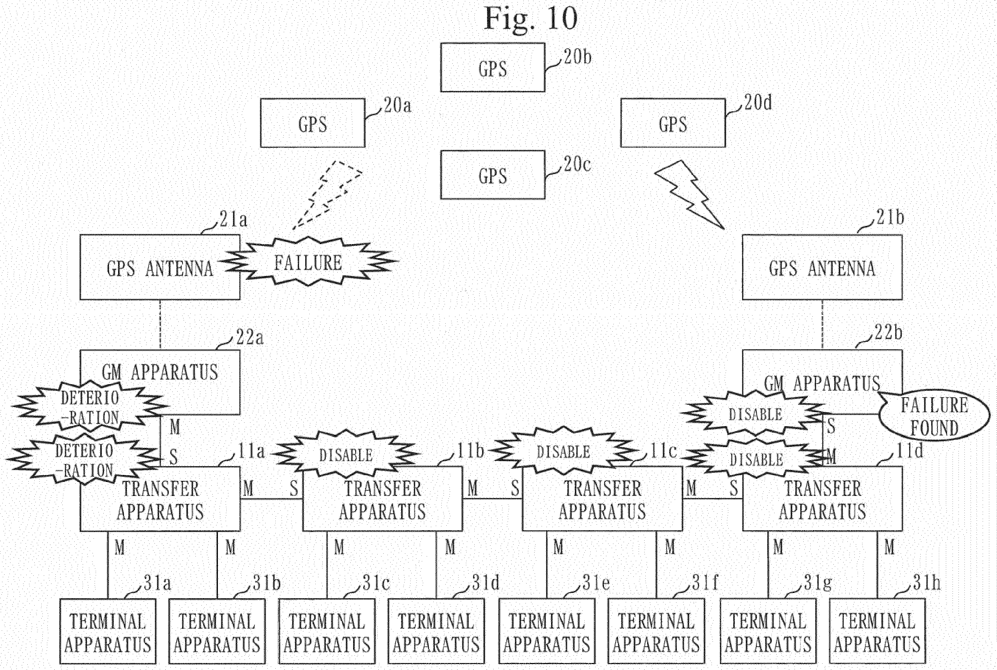

As illustrated in Fig. 10, at timing when the time out of the Sync/Follow_up message is detected (time out undetected ⇒ detected), the transfer apparatuses 11b, 11c, and 11d that are the slave apparatuses of the subsequent stage disable the information of the Announce message retained. On the other hand, the transfer apparatuses 11a, 11b, 11c, and 11d, and the GM apparatus 22b that detected the time out of the Sync/Follow_up message determine that the time out is a time synchronization anomaly from the GM apparatus 22a with higher priority information than the own apparatus. The transfer apparatuses 11a, 11b, 11c, and 11d, and the GM apparatus 22b transmit an Announce message in which priority information of the own apparatus is stored and the Sync/Follow_up message. When an Announce frame from the GM apparatus 22b is received, the transfer apparatus 11d determines that a priority is higher than a priority of the transfer apparatus 11d. The transfer apparatus 11d selects a port to which the GM apparatus 22b newly connects as the slave port, and periodically delivers the Announce message to a port other than the slave port. As with the transfer apparatus 11d, the transfer apparatus 11c, the transfer apparatus 11b, and the transfer apparatus 11a also sequentially switch the slave port to a GM apparatus 22b side when receiving the Announce frame from the GM apparatus 22b.

The transfer apparatus 11d delivers the Sync/Follow_up message periodically received from the GM apparatus 22b to the transfer apparatus 11c, and the terminal apparatuses 31g and 31h.

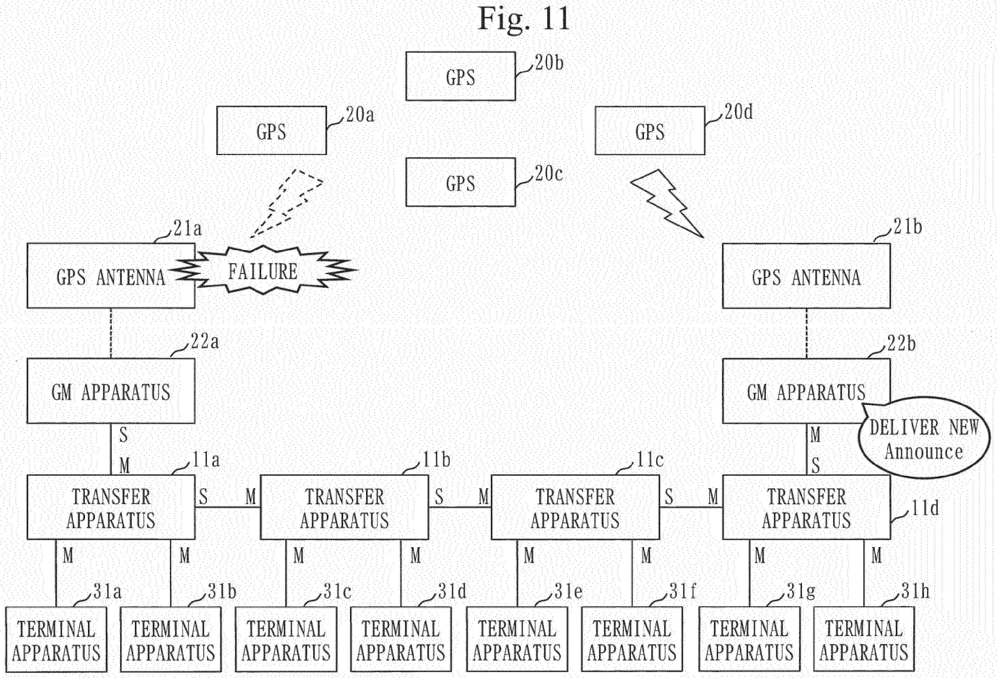

As illustrated in Fig. 11, as with the transfer apparatus 11d, the transfer apparatus 11c, the transfer apparatus 11b, and the transfer apparatus 11a also deliver the Sync/Follow_up message periodically received from the GM apparatus 22b to the terminal apparatuses 31f to 31a and the GM apparatus 22a, and the switch is completed.

*** Description of Effect of Embodiment 2. **

As described above, the process is for the transfer apparatus 11a to not transfer the Sync/Follow_up message in a case where the Announce message of which the priority information is deteriorated is received from the GM apparatus 22a. By this process, the time out of the Sync/Follow_up message occurs in all slave apparatuses, the slave apparatuses being the transfer apparatuses 11b, 11c, and 11d, the GM apparatus 22b, and the terminal apparatuses 31a to 31h, and every apparatus (entire system) that support the time synchronization can be immediately notified of some kind of a failure has occurred in the time source on a GM apparatus 22a side. The transfer apparatuses 11b, 11c, and 11d that are the slave apparatuses of the subsequent stage disable the information of the Announce message retained at a same time as detecting the time out of the Sync/Follow_up message. By the above, it becomes a state where an Announce message of the GM apparatus 22b, the Announce message being which the priority has newly become highest, can be immediately accepted, the GM apparatus 22b can be immediately selected as a new master apparatus and be switched. Since the switching time of the master apparatus relates to the synchronization accuracy of the entire system, when the switching time of the master apparatus is short, the synchronization accuracy of the entire system improves, and an unstable state of the system can be shortened. Therefore, a highly reliable time synchronization system can be realized.

In a case where arrangements of the GM apparatus 22a and the GM apparatus 22b that are made redundant are far apart (many steps removed) or in a case where the transmission interval of the Announce message of the GM apparatus and the transfer apparatus is longer compared with a Sync/Follow_up transmission interval of the GM apparatus, the Sync/Follow_up time out time becomes shorter than time for notifying of the Announce message between the GM apparatuses, and the effects above become more noticeable.

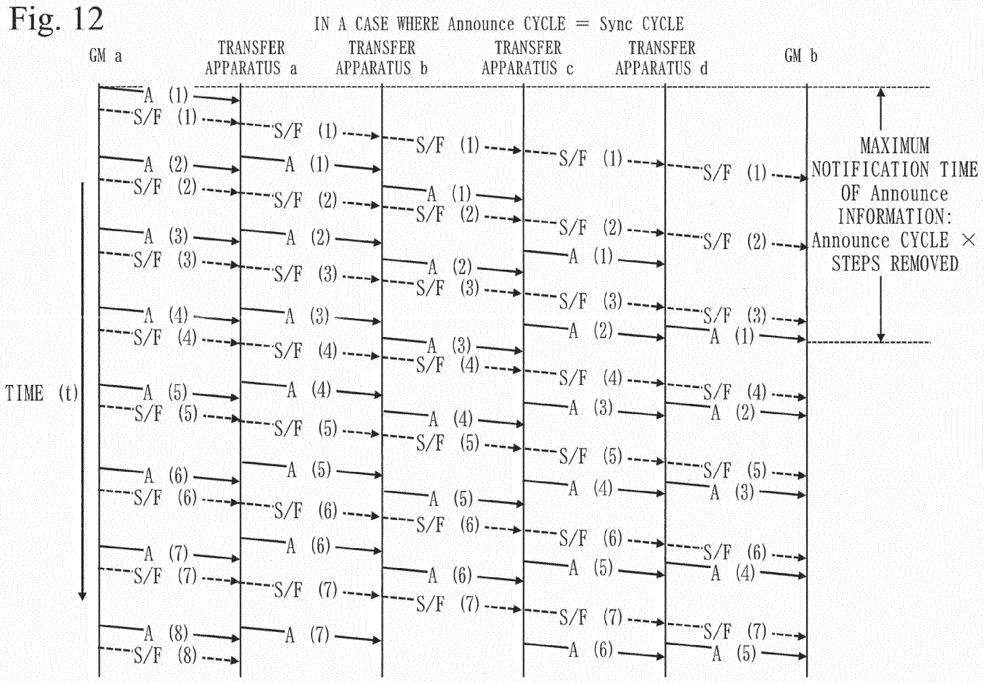

A transmission cycle of a transfer of the Announce message is managed for each port in each apparatus. Because of the above, the residence time of the transfer apparatus is an Announce transmission interval at most every time the transfer apparatus passes through one transfer apparatus. The Sync/Follow_up message is transferred immediately after the reception of the Sync/Follow_up message in each apparatus parallel to a time synchronization process. Because of the above, typically, in a case where transmission cycles of both messages are same or the cycle of the Announce message is slow, a deviation in the reliability of time to be synchronized with the state of the actual time source is to occur as farther away from the master apparatus in a transition period when the clock tree is reconfigured by some kind of failure or the like as a cause as illustrated in Fig. 12. In the time synchronization system 70 of Embodiment 2, in a case where there is the deterioration of the Announce message or the state changed during the time out, receiving and delivery of the Sync/Follow_up message to the subsequent stage is guarded until the Announce message that is to be a target is transmitted. By this guard, time synchronization that has as little difference between the state of the Announce and the reliability of the Sync/Follow_up message is possible to be realized.

Furthermore, unlike Patent Literature 1 that has no interconnectivity, the time synchronization system 70 of Embodiment 2 uses the Announce message or the Sync/Follow_up message defined in the PTP or the gPTP. Because of the above, even in a case where a transfer apparatus conforming to a same standard (time synchronization profile) as the standard of the transfer apparatus of Embodiment 2 is applied to the same time synchronization system (housed mixed in the network), the time selection delivery and the time synchronization are possible.

Embodiment 3.

A time synchronization system 70 of Embodiment 3 will be described by referring again to Fig. 8. A system configuration of the time synchronization system 70 of Embodiment 3 is Fig. 8, and a same as the system configuration in Embodiment 2.

A basic mechanism of a time selection delivery system and the time synchronization system is a same as the mechanism in Embodiment 2. In the time synchronization system 70 of Embodiment 3, however, "a delivery interval of the Announce message that the transfer apparatus delivers" is set to "less than or equal to time of which a delivery interval of the Sync/Follow_up message that the GM apparatus delivers is divided by the steps removed of the transfer apparatus between the GM apparatuses that are made redundant", as indicated in (Formula 1).

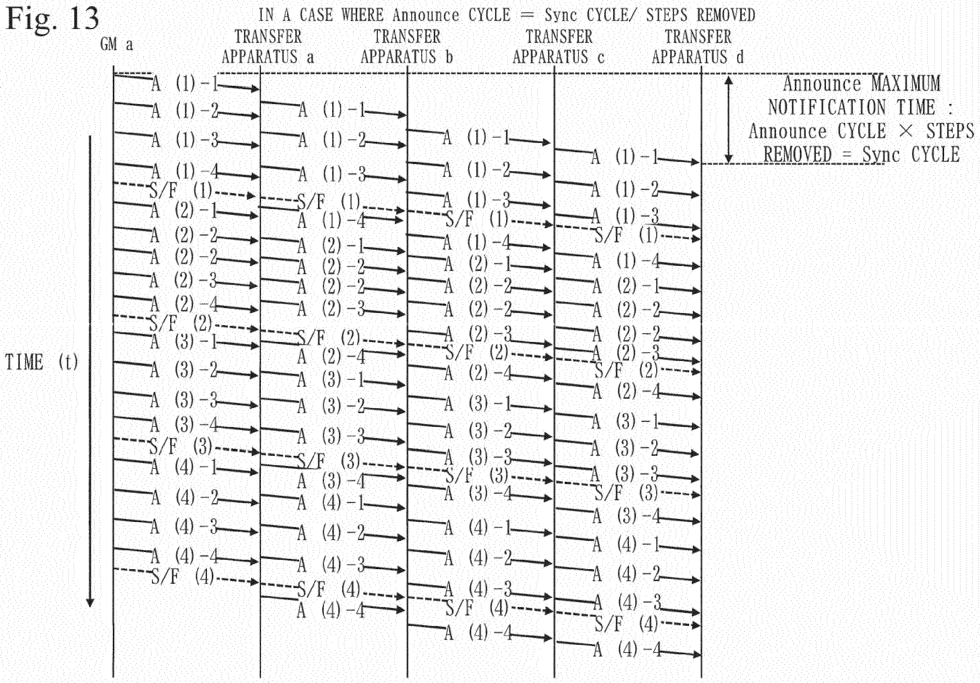

Fig. 13 illustrates this content.

Delivery interval of Announce ≤ Delivery interval of Sync / Steps removed between GM apparatuses          (Formula 1)

(Operation where master apparatuses switch)

Next, in Embodiment 3, operation in a case where the master apparatuses switch in the apparatuses of the time synchronization system 70 will be described. For example, assume that both of the GPS antennas 21a and 21b are in a state where the time information from the GPS satellite can be obtained with high sensitivity. In this case, assume that the apparatus with highest priority information is the GM apparatus 22a, and an apparatus with a second highest priority is the GM apparatus 22b. Assume that the GM apparatus 22a is selected as the master apparatus beforehand. Worsening of the reception state of the GPS antenna 21a, a failure in the GPS antenna 21a, a cable failure between the GPS antenna 21a and the GM apparatus 22a, or the like may occur. In a case where these incidents occurred, the priority information of the Announce message to be delivered from the GM apparatus 22a that is selected as the master apparatus deteriorates from the state in which the priority is the highest in the system to the state lower than the priority of the GM apparatus 22b. The transfer apparatus 11a that received from the GM apparatus 22a that is the master apparatus before the switch, the Announce message of which the priority information deteriorated, has retained the information of the Announce message with the high priority received before. The transfer apparatus 11a finds that the priority information of the time source of the GM apparatus 22a deteriorated. Even in a case where the transfer apparatuses 11a, 11b, 11c, and 11d stopped receiving the Announce message or in a case where the transfer apparatuses 11a, 11b, 11c, and 11d found the deterioration of the priority information, the transfer apparatuses 11a, 11b, 11c, and 11d retain the information of the Announce message with the high priority received last for a certain period of time that is designated (until the time out time of the Announce message). Because of the above, in the transfer apparatus 11a, the state of selecting by the BMCA does not change until "a certain period of time" passes (Announce time out time) after the last reception of the Announce message with the high priority from the GM apparatus 22a. The GM apparatus 22a remains the master apparatus based on the priority information of the Announce message before the deterioration that the transfer apparatus 11a retained. In the transfer apparatus 11a, the port that connects to the GM apparatus 22a remains the slave port.

On the other hand, the transfer apparatus 11a that detected that the time source GM apparatus 22a from the slave port deteriorated performs processes below. In a case where the Sync/Follow_up message from the GM apparatus 22a is received in the slave port, the transfer apparatus 11a guards this reception (not regard as received), and stops the time synchronization of the own apparatus and the delivery of the Sync/Follow_up message to a port other than the slave port.

In a case where priority information with a priority that is equal to or higher than the priority that has been retained until now is not received before a certain period of time passes (time out of the Announce), the transfer apparatus 11a disables the information of the Announce message with the high priority that had been retained until now. Then, the transfer apparatus 11a accepts and retains the priority information newly received and deteriorated (as new reception).

Time out time of the Announce delivered from the transfer apparatuses 11a, 11b, 11c, and 11d is short. Because of the above, in the transfer apparatuses 11b, 11c, and 11d, the terminal apparatuses 31a, 31b, 31c, 31d, 31e, 31f, 31g, and 31h, and the GM apparatus 22b that are the slave apparatuses of the subsequent stage, the Announce message that is deteriorated is delivered from the GM apparatus 22a to the GM apparatus 22b through the transfer apparatuses 11a to 11d before the time out time of the Sync/Follow_up message.

On the other hand, the GM apparatus 22b that received the Announce message that is deteriorated determines that the Announce message is a time synchronization anomaly from the GM apparatus 22a with higher priority information than the GM apparatus 22b. The GM apparatus 22b transmits the Announce message in which the priority information of the GM apparatus 22b is stored and the Sync/Follow_up message. When the Announce message from the GM apparatus 22b is received, the transfer apparatus 11d determines that the priority is higher than the priority of the Announce message received from the transfer apparatus 11c, selects a port to which the GM apparatus 22b newly connects as the slave port, and periodically delivers the Announce message to a port other than the slave port.

As with the transfer apparatus 11d, the transfer apparatus 11c, the transfer apparatus 11b, and the transfer apparatus 11a also sequentially switch the slave port to the GM apparatus 22b side when receiving the Announce frame from the GM apparatus 22b. The transfer apparatus 11d delivers the Sync/Follow_up message periodically received from the GM apparatus 22b to the transfer apparatus 11c, and the terminal apparatuses 31g and 31h. As with the transfer apparatus 11d, the transfer apparatus 11c, the transfer apparatus 11b, and the transfer apparatus 11a also deliver the Sync/Follow_up message periodically received from the GM apparatus 22b to the terminal apparatuses 31f to 31a and the GM apparatus 22a, and the switch is completed.

*** Description of Effect of Embodiment 3. ***

As described above, in a case where the Announce message of which the priority information is deteriorated is received from the GM apparatus 22a, in the time synchronization system 70 of Embodiment 3, "the delivery interval of the Announce message that the transfer apparatus delivers" is set to "less than or equal to the time of which the delivery interval of the Sync/Follow_up message that the GM apparatus delivers is divided by the steps removed of the transfer apparatus between the GM apparatuses that are made redundant". Therefore, the time out of the Announce due to the Announce message deterioration and the Announce that is deteriorated is to be newly accepted in all slave apparatuses, the slave apparatuses being the transfer apparatuses 11b to 11d, the GM apparatus 22b, and the terminal apparatuses 31a to 31h. Because of the above, every apparatus (entire system) that support the time synchronization can be immediately notified of a failure of which the Announce deteriorates has occurred in the time source on the GM apparatus 22a side. By the transfer apparatuses 11a to 11d accepting information of the Announce message that is deteriorated, it becomes a state where an Announce message of the GM apparatus 22b of which the priority has newly become highest can be immediately accepted. Because of the above, the GM apparatus 22b can be immediately selected as a new master apparatus and be switched. Since the switching time of the master apparatus relates to the synchronization accuracy of the entire system, when the switching time of the master apparatus is short, the synchronization accuracy of the entire system improves, and since the unstable state of the system can also be shorted, a highly reliable time synchronization system can be realized.

In a case where the arrangements of the GM apparatus 22a and the GM apparatus 22b are far apart (many steps removed) or in a case where there are many steps removed to a terminal apparatus that is farthest from the GM apparatus 22b, the effects above become more noticeable.

Furthermore, even in a case where Announce delivery intervals of the GM apparatuses 22a and 22b are long, the effects described above can be obtained by shortening the Announce delivery intervals of the transfer apparatuses 11a to 11d.

Unlike Patent Literature 1 that has no interconnectivity, the time synchronization system 70 of Embodiment 3 uses the Announce message and the Sync/Follow_up message defined in the PTP and the gPTP. Because of the above, even in a case where a transfer apparatus conforming to a same standard (time synchronization profile) as the standard of the transfer apparatus of Embodiment 3 is applied to the same time synchronization system (housed mixed in the network), the time selection delivery and the time synchronization are possible.

Embodiment 4.

A hardware configuration of the transfer apparatus 10 described in Embodiment 1 to Embodiment 3 will be supplemented by Embodiment 4. Functions of the transfer apparatus 10 described in Embodiment 1 to Embodiment 3 may be enabled by a program. That is, the arithmetic unit 3 illustrated in Fig. 1 is a processor, and functions of each of the arithmetic circuit for time synchronization 4, the arithmetic circuit for layer 2 transfer and relay 5, the frame reception process arithmetic circuit 6, and the frame transmission process arithmetic circuit 7 may be enabled by a program. More specifically, the Pdelay message reception process 101, the Sync/Follow_up message reception process 102, the Announce message reception process 103, the Sync reception/transmission guard management process 104, the delay measurement arithmetic process 105, the time synchronization arithmetic process 106, the time selection arithmetic process 107, and the frame transmission process 108 illustrated in Fig. 2 are enabled by a program.

Each process from the Pdelay message reception process 101 to the frame transmission process 108 can be regarded as a processing unit. A program that enables functions of each processing unit of the Pdelay message reception process 101 to the frame transmission process 108 may be provided by being stored in a computer-readable recording medium, or may be provided as a program product. Or, the functions of the transfer apparatus 10 may be enabled by hardware. In this case, four circuits that are hardware of the arithmetic unit 3 of Fig. 1 enable the functions of each processing unit from the Pdelay message reception process 101 to the frame transmission process 108 of Fig. 2. The functions of each processing unit of the transfer apparatus 10 may be enabled by one electronic circuit or may be enabled by being distributed to a plurality of electronic circuits. Some of functions of elements of the functions of the transfer apparatus 10 may be enabled by the electronic circuit and the rest of the functions may be enabled by software.

Each of the processor and the electronic circuit is also called processing circuitry or circuitry. Functions of the Pdelay message reception process 101 to the frame transmission process 108 of the transfer apparatus 10 may be enabled by the circuitry.

Embodiment 1 to Embodiment 4 have been described above on the transfer apparatus 10 and the time synchronization system 70. Among the embodiments, two or more embodiments may be combined and executed. Or, one technical matter among a plurality of technical matters included in one embodiment may partially be executed. Or, technical matters included in each embodiment may be combined partially with one another and executed.

**Reference Signs List**

1A, 2A, 2B, 3A, 3B, 4A, 4B, 5A, 5B, 5C, 6A, 7A, 7B, 8A, 8B, 8C: output information; 1: processor; 2: memory; 3: arithmetic unit; 4: arithmetic circuit for time synchronization; 5: arithmetic circuit for layer 2 transfer and relay; 6: frame reception process arithmetic circuit; 7: frame transmission process arithmetic circuit; 8: frame input/output interface; 10: transfer apparatus; 20a, 20b, 20c, 20d: GPS satellite; 21a, 21b: GPS antenna; 22a, 22b: GM apparatus; 11a, 11b, 11c, 11d: transfer apparatus; 31a, 31b, 31c, 31d, 31e, 31f, 31g, 31h: terminal apparatus; 41: Pdelay_Resp message; 42: Pdelay_Resp_Follow_up message; 43: Pdelay_Req message; 51: Sync/Follow_up message; 61: Announce message; 70: time synchronization system; 101: Pdelay message reception process; 102: Sync/Follow_up message reception process; 103: Announce message reception process; 104: Sync reception/transmission guard management process; 105: delay measurement arithmetic process; 106: time synchronization arithmetic process; 107: time selection arithmetic process; 108: frame transmission process.

**Claims**

1. A transfer apparatus (10), including two or more communication ports, that performs time synchronization through a network, the transfer apparatus (10) comprising:

   first means (101,102,103) for identifying from data received from each communication port, a message for delay measurement, a time source notification message, and a time notification message;
   second means (103) for retaining for each communication port, priority information of a time source, the priority information including reliability of time notified by the time source stored in the time source notification message received for each communication port and information that identifies an apparatus of the time source, and for managing for each communication port, reception or non-reception of the time source notification message and a change in priority information;
   third means (107) for selecting as a slave port, the communication port with highest priority information among priority information of the time source managed in each communication port and priority information of the transfer apparatus including information that identifies the transfer apparatus, and for recognizing as a master apparatus, an apparatus that is the time source corresponding to the slave port selected through the priority information;

fourth means (108) for periodically delivering the time source notification message, received in the slave port, that stores time source information having the master apparatus as the time source, to the communication port other than the slave port;

fifth means (102) for managing for each communication port, reception or non-reception of the time notification message that stores time information;

sixth means (103,104) for executing, in a case where either one of a reception state of the time source notification message and a reception state of the time notification message received in each communication port changed, either performing a reception guard for a certain period of time reception of the time notification message from a target communication port that is the communication port of which the reception state changed or removing the reception guard for reception of the time notification message from the target communication port;

seventh means (103,104) for executing, in a case where either one of the reception state of the time source notification message and the reception state of the time notification message received from the slave port changed, either performing a delivery guard for a certain period of time delivery of the time notification message to the communication port other than the slave port or removing the delivery guard for a certain period of time, delivery of the time notification message to the communication port other than the slave port;

eighth means (108) for measuring a propagation delay by transmitting and receiving a message either between the master apparatus and the transfer apparatus or between an adjacent apparatus and the transfer apparatus;

ninth means (106) for, in a case where there is no reception guard for the time notification message of the slave port when managing time in the transfer apparatus, synchronizing time of the transfer apparatus with time of the master apparatus based on the time notification message periodically received in the slave port and delivered from the master apparatus and information including delay time; and

tenth means (108) for, in a case where there is no delivery guard for the time notification message of the slave port, adding information on a parameter that affects in terms of time by passing through the transfer apparatus, the time notification message received from the slave port, and for delivering the time notification message to which the information is added to the communication port other than the slave port,

wherein

the sixth means (103,104), in a case where the priority information of the time source of each communication port is enabled and there is a change in a priority from a high state to a low state, performing the reception guard of the time notification message from a target port that is the communication port with the change, wherein the transfer apparatus comprising:

eleventh means (102) for regarding the time notification message from the target port as not received even when received when reception of the time notification message from each communication port is under the reception guard, and for making a time out of the time notification message of the target port to occur in a case where the time notification message of the target port is not received for a certain period of time; and

twelfth means (103) for disabling priority information of the time source that is managed in the target port in a case where the target port changed from a state in which the time out of the time notification message is not occurring to a state in which the time out of the time notification message occurred, wherein the sixth means (103,104) removes the reception guard of the time notification message in a case where the time source notification message is newly received in the target port after disabling the priority information.

2. The transfer apparatus (10) according to claim 1, wherein
the seventh means (103,104), after delivering the time source notification message from the communication port other than the slave port, in a case where the priority information of the time source became disabled in the slave port or in a case where the slave port changed to a different communication port, performs, for each communication port, the delivery guard of the time notification message received from a new slave port until a latest time source notification message is delivered from the communication port other than the new slave port.

3. The transfer apparatus (10) according to claim 1 or 2 comprising:
thirteenth means (108) for not delivering the time source notification message and the time notification message to a passive port decided on by BMCA of gPTP among the two or more communication ports.

4. The transfer apparatus (10) according to any one of claim 1 to claim 3 comprising:
fourteenth means (108) for making a delivery interval of the time source notification message delivered from the communication port other than the slave port shorter than an interval that the master apparatus delivers the time notification message.

5. The transfer apparatus (10) according to any one of claim 1 to claim 3 comprising:
fifteenth means (108) for making a delivery interval of the time source notification message delivered from a master port to time less than or equal to an interval that the master apparatus delivers the time notification message divided by maximum steps removed when delivering time information within a system.

6. A time synchronization system comprising:

a plurality of apparatuses that synchronize time through one or more transfer apparatuses, wherein the apparatus, including the transfer apparatus, that is to be a time source periodically transmits and receives a time source notification message that has stored priority information of the time source, the priority information including reliability of time to be delivered from the time source and information that identifies the apparatus of the time source,
each apparatus selects the time source that delivers priority information with a highest priority as a master apparatus,
in a case where each slave apparatus other than the master apparatus received a time notification message, including time information, that the master apparatus periodically transmits from a communication port that received the time source notification message from the master apparatus, each slave apparatus other than the master apparatus synchronizes time of an own apparatus based on time information of the master apparatus, the transfer apparatus that is the slave delivers the time notification message to the communication port other than the communication port that received the time notification message,
each slave apparatus manages for each communication port, reception or non-reception of the time source notification message with the master apparatus as the time source and that is periodically received, and a change in priority information, and in a case where either one of a reception state of the time source notification message and priority information changed, controls either one of reception of the time notification message and delivery of the time notification message, and
each apparatus newly selects the time source with highest priority information, and switches the time source,

wherein the transfer apparatus is a transfer apparatus according to any one of claim 1 to claim 5.

7. The time synchronization system according to claim 6, wherein

each apparatus has time out detection means (102) for detecting a time out of the time notification message in a case where the time notification message scheduled to be periodically received for each communication port is not received for a certain period of time,
each transfer apparatus has disable means (103) for disabling priority information of the time source retained in the communication port in a case where a state in which the time out of the time notification message is not occurring changed to a state in which the time out of the time notification message occurred,
the transfer apparatus that is the slave stops for a certain period of time reception of the time notification message received from the master apparatus and delivery of the time notification message received in a case where priority information of the master apparatus changed from a state in which a priority is high to a low state,
the slave apparatus disables reception and priority information from the master apparatus in a case where a state in which the time out of the time notification message is not occurring changed to the state in which a time out occurred, and
each apparatus newly selects the time source with highest priority information, and switches the time source.

8. The time synchronization system according to claim 6 or claim 7, wherein
a transmission interval of the time source notification message that each transfer apparatus transmits is shorter than an interval that the master apparatus delivers the time notification message.

9. The time synchronization system according to claim 8, wherein
a transmission interval of the time source notification message that each transfer apparatus transmits is time less than or equal to an interval that the master apparatus delivers the time notification message divided by maximum steps removed when delivering information in the time synchronization system.

**Patentansprüche**

1. Transfervorrichtung (10), aufweisend zwei oder mehr Kommunikations-Ports, welche Zeitsynchronisation über ein Netzwerk durchführt, wobei die Transfervorrichtung (10) umfasst:

erste Mittel (101, 102, 103) zum Identifizieren aus Daten, die von jedem Kommunikations-Port empfangen werden, einer Meldung zur Verzögerungsmessung, einer Zeitquellenbenachrichtigungsmeldung und einer Zeitbenachrichtigungsmeldung;

zweite Mittel (103) zum Zurückhalten für jeden Kommunikations-Port von Prioritätsinformationen einer Zeitquelle, wobei die Prioritätsinformationen eine Zuverlässigkeit einer Zeit, die von der Zeitquelle mitgeteilt wird und die in der für jeden Kommunikations-Port empfangenen Zeitquellenbenachrichtigungsmeldung gespeichert ist, und Informationen, die eine Vorrichtung der Zeitquelle identifizieren, umfassen, und zum Handhaben für jeden Kommunikations-Port eines Empfangs oder Nichtempfangs der Zeitquellenbenachrichtigungsmeldung und einer Änderung der Prioritätsinformationen;

dritte Mittel (107) zum Auswählen, als einen Slave-Port, des Kommunikations-Ports mit Informationen höchster Priorität unter Prioritätsinformationen der Zeitquelle, die in jedem Kommunikations-Port gehandhabt werden, und Prioritätsinformationen der Transfervorrichtung, einschließlich Informationen, welche die Transfervorrichtung identifizieren, und zum Erkennen, als eine Master-Vorrichtung, einer Vorrichtung, welche die Zeitquelle ist, die dem durch die Prioritätsinformationen ausgewählten Slave-Port entspricht;

vierte Mittel (108) zum periodischen Übermitteln der im Slave-Port empfangenen Zeitquellenbenachrichtigungsmeldung, die Zeitquelleninformationen mit der Master-Vorrichtung als die Zeitquelle speichert, an den Kommunikations-Port, der nicht der Slave-Port ist;

fünfte Mittel (102) zum Handhaben für jeden Kommunikations-Port von Empfang oder Nichtempfang der Zeitbenachrichtigungsmeldung, welche Zeitinformationen speichert;

sechste Mittel (103, 104) zum Ausführen, in einem Fall, in dem sich einer von einem Empfangszustand der Zeitquellenbenachrichtigungsmeldung und einem Empfangszustand der Zeitbenachrichtigungsmeldung, welche in jedem Kommunikations-Port empfangen wurden, geändert hat, entweder einer Durchführung einer Empfangssperre für eine bestimmte Empfangs-Zeitdauer der Zeitbenachrichtigungsmeldung von einem Ziel-Kommunikations-Port, welcher der Kommunikations-Port ist, dessen Empfangszustand sich geändert hat, oder einer Aufhebung der Empfangssperre für einen Empfang der Zeitbenachrichtigungsmeldung von dem Ziel-Kommunikations-Port;

siebte Mittel (103, 104) zum Ausführen, in einem Fall, in dem sich einer von dem Empfangszustand der Zeitquellenbenachrichtigungsmeldung und dem Empfangszustand der Zeitbenachrichtigungsmeldung, welche von dem Slave-Port empfangen wurden, geändert hat, entweder einer Durchführung einer Übermittlungssperre für eine bestimmte Übermittlungs-Zeitdauer der Zeitbenachrichtigungsmeldung an den Kommunikations-Port, welcher nicht der Slave-Port ist, oder einer Aufhebung der Übermittlungssperre für eine bestimmte Zeitdauer, und Übermittlung der Zeitbenachrichtigungsmeldung an den Kommunikations-Port, welcher nicht der Slave-Port ist;

achte Mittel (108) zum Messen einer Laufzeitverzögerung durch Senden und Empfangen einer Meldung entweder zwischen der Master-Vorrichtung und der Transfervorrichtung oder zwischen einer benachbarten Vorrichtung und der Transfervorrichtung;

neunte Mittel (106) zum, in einem Fall, in dem es keine Empfangssperre für die Zeitbenachrichtigungsmeldung des Slave-Ports gibt, wenn eine Zeit in der Transfervorrichtung gehandhabt wird, Synchronisieren einer Zeit der Transfervorrichtung mit einer Zeit der Master-Vorrichtung auf der Grundlage der Zeitbenachrichtigungsmeldung, die periodisch in dem Slave-Port empfangen und von der Master-Vorrichtung übermittelt wird, und von Informationen, einschließlich einer Verzögerungszeit; und

zehnte Mittel (108) zum, in einem Fall, in dem es keine Übermittlungssperre für die Zeitbenachrichtigungsmeldung des Slave-Ports gibt, Hinzufügen von Informationen über einen Parameter, der sich in Bezug auf Zeit durch Passieren der Transfervorrichtung auf die vom Slave-Port empfangene Zeitbenachrichtigungsmeldung auswirkt, und zum Übermitteln der Zeitbenachrichtigungsmeldung, zu der die Informationen hinzugefügt wurden, an den Kommunikations-Port, der nicht der Slave-Port ist, wobei

die sechsten Mittel (103, 104) in einem Fall, in dem die Prioritätsinformationen der Zeitquelle jedes Kommunikations-Ports aktiviert sind und es eine Änderung einer Priorität von einem hohen Zustand zu einem geringen Zustand gibt, die Empfangssperre der Zeitbenachrichtigungsmeldung von einem Ziel-Port, welcher der Kommunikations-Port mit der Änderung ist, durchführt, wobei

die Transfervorrichtung umfasst:

elfte Mittel (102) zum Betrachten der Zeitbenachrichtigungsmeldung von dem Ziel-Port als nicht empfangen, auch wenn diese empfangen wurde, wenn ein Empfang der Zeitbenachrichtigungsmeldung von jedem Kommunikations-Port unter der Empfangssperre steht, und zum Veranlassen, dass eine Zeitüberschreitung für die Zeitbenachrichtigungsmeldung des Ziel-Ports in einem Fall eintritt, in dem die Zeitbenachrichtigungsmeldung des Ziel-Ports für eine bestimmte Zeitdauer nicht empfangen wird; und

zwölfte Mittel (103) zum Deaktivieren von Prioritätsinformationen der Zeitquelle, die in dem Ziel-Port gehandhabt werden, in einem Fall, in dem der Ziel-Port von einem Zustand, in dem die Zeitüberschreitung der Zeitbenachrichtigungsmeldung nicht eintritt, in einen Zustand gewechselt ist, in dem die Zeitüberschreitung der Zeitbenachrichtigungsmeldung eingetreten ist, wobei

die sechsten Mittel (103, 104) die Empfangssperre der Zeitbenachrichtigungsmeldung in einem Fall aufhebt, in dem die Zeitquellenbenachrichtigungsmeldung nach Deaktivieren der Prioritätsinformationen neu im Ziel-Port empfangen wird.

2. Transfervorrichtung (10) nach Anspruch 1, wobei

das siebte Mittel (103, 104), nach Übermitteln der Zeitquellenbenachrichtigungsmeldung von dem Kommunikations-Port, der nicht der Slave-Port ist, in einem Fall, in dem die Prioritätsinformationen der Zeitquelle in dem Slave-Port deaktiviert wurden, oder in einem Fall, in dem der Slave-Port zu einem anderen Kommunikations-Port gewechselt ist, für jeden Kommunikations-Port die Übermittlungssperre der von einem neuen Slave-Port empfangenen Zeitbenachrichtigungsmeldung durchführt, bis eine neueste Zeitquellenbenachrichtigungsmeldung von dem Kommunikations-Port, welcher nicht der neue Slave-Port ist, übermittelt wird.

3. Transfervorrichtung (10) nach Anspruch 1 oder 2, umfassend:

dreizehnte Mittel (108) zum Nichtübermitteln der Zeitquellenbenachrichtigungsmeldung und der Zeitbenachrichtigungsmeldung an einen passiven Port, der von einem BMCA eines gPTP unter den zwei oder mehr Kommunikations-Ports festgelegt wurde.

4. Transfervorrichtung (10) nach einem von Anspruch 1 bis Anspruch 3, umfassend:

vierzehnte Mittel (108) zum Veranlassen, dass ein Übermittlungsintervall der Zeitquellenbenachrichtigungsmeldung, die von dem Kommunikations-Port, der nicht der Slave-Port ist, übermittelt wird, kürzer ist als ein Intervall, in dem die Master-Vorrichtung die Zeitbenachrichtigungsmeldung übermittelt.

5. Transfervorrichtung (10) nach einem von Anspruch 1 bis Anspruch 3, umfassend:

fünfzehnte Mittel (108) zum Veranlassen, dass ein Übermittlungsintervall der von einem Master-Port übermittelten Zeitquellenbenachrichtigungsmeldung kleiner oder gleich einem Intervall ist, in dem die Master-Vorrichtung die Zeitbenachrichtigungsmeldung übermittelt, geteilt durch Maximal-Schritte, die bei der Übermittlung von Zeitinformationen innerhalb eines Systems aufgehoben wurden.

6. Zeitsynchronisationssystem, umfassend:

eine Vielzahl von Vorrichtungen, welche eine Zeit durch eine oder mehrere Transfervorrichtungen synchronisieren, wobei

die Vorrichtung, einschließlich der Transfervorrichtung, welche eine Zeitquelle sein soll, eine Zeitquellenbenachrichtigungsmeldung, die gespeicherte Prioritätsinformationen der Zeitquelle hat, periodisch sendet und empfängt, wobei die Prioritätsinformationen eine Zuverlässigkeit einer Zeit, welche von der Zeitquelle zu übermitteln ist, und Informationen zur Identifizierung der Vorrichtung der Zeitquelle umfassen,

jede Vorrichtung die Zeitquelle, welche Prioritätsinformationen mit höchster Priorität übermittelt, als eine Master-Vorrichtung auswählt,

in einem Fall, in dem jede Slave-Vorrichtung, die nicht die Master-Vorrichtung ist, eine Zeitbenachrichtigungsmeldung, einschließlich Zeitinformationen, empfangen hat, welche die Master-Vorrichtung von einem Kommunikations-Port, der die Zeitquellenbenachrichtigungsmeldung von der Master-Vorrichtung empfangen hat, periodisch sendet, jede Slave-Vorrichtung, die nicht die Master-Vorrichtung ist, eine Zeit einer eigenen Vorrichtung auf der Grundlage von Zeitinformationen der Master-Vorrichtung synchronisiert,

die Transfervorrichtung, welche der Slave ist, die Zeitbenachrichtigungsmeldung an den Kommunikations-Port, der nicht der Kommunikations-Port ist, der die Zeitbenachrichtigungsmeldung empfangen hat, übermittelt,

jede Slave-Vorrichtung für jeden Kommunikations-Port einen Empfang oder Nichtempfang der Zeitquellenbenachrichtigungsmeldung mit der Master-Vorrichtung als die Zeitquelle, und die periodisch empfangen wird, und eine Änderung der Prioritätsinformationen handhabt, und in einem Fall, in dem sich eines von einem Empfangszustand der Zeitquellenbenachrichtigungsmeldung oder Prioritätsinformationen geändert haben, eines von einem Empfang der Zeitbenachrichtigungsmeldung und einer Übermittlung der Zeitbenachrichtigungsmeldung steuert, und

jede Vorrichtung die Zeitquelle mit Informationen höchster Priorität neu auswählt und die Zeitquelle wechselt, wobei die Transfervorrichtung eine Transfervorrichtung nach einem von Anspruch 1 bis Anspruch 5 ist.

7. Zeitsynchronisationssystem nach Anspruch 6, wobei:

jede Vorrichtung Zeitüberschreitungsdetektionsmittel (102) zum Detektieren einer Zeitüberschreitung der Zeitbenachrichtigungsmeldung aufweist, in einem Fall, in dem die Zeitbenachrichtigungsmeldung, die für jeden Kommunikations-Port periodisch empfangen werden soll, für eine bestimmte Zeitdauer nicht empfangen wird, jede Transfervorrichtung Deaktivierungsmittel (103) zum Deaktivieren von Prioritätsinformationen der Zeitquelle, die in dem Kommunikations-Port zurückgehalten sind, aufweist, in einem Fall, in dem sich ein Zustand, in dem die Zeitüberschreitung der Zeitbenachrichtigungsmeldung nicht eintritt, in einen Zustand ändert, in dem die Zeitüberschreitung der Zeitbenachrichtigungsmeldung eingetreten ist,

die Transfervorrichtung, die der Slave ist, Empfang der von der Master-Vorrichtung empfangenen Zeitbenachrichtigungsmeldung und Übermittlung der empfangenen Zeitbenachrichtigungsmeldung für eine bestimmte Empfangs-Zeitdauer stoppt, in einem Fall, in dem sich die Prioritätsinformationen der Master-Vorrichtung von einem Zustand, in dem eine Priorität hoch ist, zu einem geringeren Zustand geändert haben,

die Slave-Vorrichtung einen Empfang und Prioritätsinformationen von der Master-Vorrichtung in einem Fall deaktiviert, in dem sich ein Zustand, in dem keine Zeitüberschreitung der Zeitbenachrichtigungsmeldung eintritt, in den Zustand geändert hat, in dem eine Zeitüberschreitung eingetreten ist, und

jede Vorrichtung die Zeitquelle mit Informationen höchster Priorität neu auswählt und die Zeitquelle wechselt.

8. Zeitsynchronisationssystem nach Anspruch 6 oder Anspruch 7, wobei:

ein Sendeintervall der Zeitquellenbenachrichtigungsmeldung, die jede Transfervorrichtung sendet, kürzer ist als ein Intervall, in dem die Master-Vorrichtung die Zeitbenachrichtigungsmeldung übermittelt.

9. Zeitsynchronisationssystem nach Anspruch 8, wobei:

ein Sendeintervall der Zeitquellenbenachrichtigungsmeldung, die jede Transfervorrichtung sendet, eine Zeit kleiner oder gleich einem Intervall ist, in dem die Master-Vorrichtung die Zeitbenachrichtigungsmeldung übermittelt, geteilt durch Maximal-Schritte, die aufgehoben werden, wenn Informationen in dem Zeitsynchronisationssystem übermittelt werden.

**Revendications**

1. Appareil de transfert (10), incluant deux ports de communication ou plus, qui effectue une synchronisation temporelle à travers un réseau, l'appareil de transfert (10) comprenant :

des premiers moyens (101, 102, 103) pour identifier, à partir de données reçues de chaque port de communication, un message de mesure de retard, un message de notification de source de temps et un message de notification de temps ;

des deuxièmes moyens (103) pour conserver, pour chaque port de communication, des informations de priorité d'une source de temps, les informations de priorité incluant la fiabilité du temps notifié par la source de temps stockée dans le message de notification de source de temps reçu pour chaque port de communication et des informations qui identifient un appareil de la source de temps, et pour gérer, pour chaque port de communication, la réception ou la non-réception du message de notification de source de temps et un changement d'informations de priorité ;

des troisièmes moyens (107) pour sélectionner, en tant que port asservi, le port de communication avec des informations de priorité la plus élevée parmi des informations de priorité de la source de temps gérée dans chaque port de communication et des informations de priorité de l'appareil de transfert incluant des informations qui identifient l'appareil de transfert, et pour reconnaître, en tant qu'appareil maître, un appareil qui est la source de temps correspondant au port asservi sélectionné par le biais des informations de priorité ;

des quatrièmes moyens (108) pour délivrer périodiquement le message de notification de source de temps, reçu dans le port asservi, qui stocke des informations de source de temps présentant l'appareil maître comme source de temps, au port de communication autre que le port asservi ;

des cinquièmes moyens (102) pour gérer pour chaque port de communication, la réception ou la non-réception du message de notification de temps qui stocke des informations de temps ;

des sixièmes moyens (103, 104) pour exécuter, dans un cas où l'un ou l'autre d'un état de réception du message de notification de source de temps et d'un état de réception du message de notification de temps reçu dans chaque port de communication a changé, soit l'exécution d'une garde de réception pendant une certaine période de réception de temps du message de notification de temps à partir d'un port de communication cible qui est le port de communication dont l'état de réception a changé, soit le retrait de la garde de réception pour la réception du message de notification de temps à partir du port de communication cible ;

des septièmes moyens (103, 104) pour exécuter, dans un cas où l'un ou l'autre de l'état de réception du message de notification de source de temps et de l'état de réception du message de notification de temps reçu du port asservi a changé, soit l'exécution d'une garde de délivrance pendant une certaine période de délivrance du message de notification de temps au port de communication autre que le port asservi, soit la suppression de la garde de délivrance pendant une certaine période de temps, la délivrance du message de notification de temps au port de communication autre que le port asservi ;

des huitièmes moyens (108) pour mesurer un délai de propagation en émettant et en recevant un message soit entre l'appareil maître et l'appareil de transfert, soit entre un appareil adjacent et l'appareil de transfert ;

des neuvièmes moyens (106) pour, dans un cas où il n'y a pas de garde de réception pour le message de notification de temps du port asservi lors de la gestion du temps dans l'appareil de transfert, synchroniser le temps de l'appareil de transfert avec le temps de l'appareil maître sur la base du message de notification de temps reçu périodiquement dans le port asservi et délivré par l'appareil maître et des informations incluant le temps de retard ; et

des dixième moyens (108) pour, dans un cas où il n'y a pas de garde de délivrance pour le message de notification de temps du port asservi, ajouter des informations sur un paramètre qui affecte en termes de temps en passant par l'appareil de transfert, le message de notification de temps reçu en provenance du port asservi, et pour délivrer le message de notification de temps auquel les informations sont ajoutées au port de communication autre que le port asservi, dans lequel

les sixièmes moyens (103, 104), dans un cas où les informations de priorité de la source de temps de chaque port de communication sont activées et il y a un changement d'une priorité d'un état haut à un état bas, effectuant la garde de réception du message de notification de temps à partir d'un port cible qui est le port de communication avec le changement, dans lequel

l'appareil de transfert comprenant :

des onzième moyens (102) pour considérer le message de notification de temps en provenance du port cible comme non reçu même lorsqu'il est reçu lorsque la réception du message de notification de temps en provenance de chaque port de communication est sous la garde de réception, et pour amener une temporisation du message de notification de temps du port cible à survenir dans un cas où le message de notification de temps du port cible n'est pas reçu pendant une certaine période de temps ; et

des douzième moyens (103) pour désactiver les informations de priorité de la source de temps qui est gérée dans le port cible dans un cas où le port cible est passé d'un état dans lequel la temporisation du message de notification de temps ne survient pas à un état dans lequel la temporisation du message de notification de temps survient, dans lequel

les sixième moyens (103, 104) suppriment la garde de réception du message de notification de temps dans le cas où le message de notification de source de temps est nouvellement reçu dans le port cible après la désactivation des informations de priorité.

2. Appareil de transfert (10) selon la revendication 1, dans lequel
les septième moyens (103, 104), après la délivrance du message de notification de source de temps à partir du port de communication autre que le port asservi, dans un cas où les informations de priorité de la source de temps sont devenues désactivées dans le port asservi ou dans un cas dans lequel le port asservi a changé en un port de communication différent, effectuent, pour chaque port de communication, la garde de délivrance du message de notification de temps reçu en provenance d'un nouveau port asservi jusqu'à ce qu'un dernier message de notification de source de temps soit délivré à partir du port de communication autre que le nouveau port asservi.

3. Appareil de transfert (10) selon la revendication 1 ou 2, comprenant :
des treizième moyens (108) pour ne pas délivrer le message de notification de source de temps et le message de notification de temps à un port passif décidé par BMCA de gPTP parmi les deux ports de communication ou plus.

4. Appareil de transfert (10) selon l'une quelconque des revendications 1 à la revendication 3, comprenant :
des quatorzième moyens (108) pour rendre un intervalle de délivrance du message de notification de source de temps délivré à partir du port de communication autre que le port asservi plus court qu'un intervalle pendant lequel l'appareil maître délivre le message de notification de temps.

5. Appareil de transfert (10) selon l'une quelconque des revendications 1 à la revendication 3, comprenant :
des quinzième moyens (108) pour rendre un intervalle de délivrance du message de notification de source de temps délivré à partir d'un port principal à un temps inférieur ou égal à un intervalle pendant lequel l'appareil principal délivre

**EP 4 418 602 B1**

le message de notification de temps divisé par des étapes maximales supprimées lors de la délivrance d'informations de temps dans un système.

6. Système de synchronisation temporelle, comprenant :

une pluralité d'appareils qui synchronisent le temps à travers un ou plusieurs appareils de transfert, dans lequel l'appareil, incluant l'appareil de transfert, qui doit être une source de temps transmet et reçoit périodiquement un message de notification de source de temps qui a stocké des informations de priorité de la source de temps, les informations de priorité incluant la fiabilité du temps à délivrer à partir de la source de temps et des informations qui identifient l'appareil de la source de temps,

chaque appareil sélectionne la source de temps qui fournit des informations de priorité avec une priorité la plus élevée en tant qu'appareil maître,

dans un cas où chaque appareil asservi autre que l'appareil maître a reçu un message de notification de temps, incluant des informations de temps, que l'appareil maître transmet périodiquement à partir d'un port de communication qui a reçu le message de notification de source de temps à partir de l'appareil maître, chaque appareil esclave autre que l'appareil maître synchronise le temps d'un propre appareil sur la base des informations de temps de l'appareil maître,

l'appareil de transfert qui est asservi délivre le message de notification d'heure au port de communication autre que le port de communication qui a reçu le message de notification d'heure,

chaque appareil esclave gère, pour chaque port de communication, la réception ou la non-réception du message de notification de source de temps avec l'appareil maître comme source de temps et qui est périodiquement reçu, et un changement d'informations de priorité, et dans le cas où l'un ou l'autre d'un état de réception du message de notification de source de temps et d'informations de priorité a changé, commande l'une ou l'autre de la réception du message de notification de temps et de la délivrance du message de notification de temps, et

chaque appareil sélectionne à nouveau la source de temps avec des informations de priorité la plus élevée, et commute la source de temps,

dans lequel l'appareil de transfert est un appareil de transfert selon l'une quelconque des revendications 1 à 5.

7. Système de synchronisation temporelle selon la revendication 6, dans lequel

chaque appareil présente des moyens de détection de temporisation (102) pour détecter une temporisation du message de notification de temps dans un cas où le message de notification de temps programmé pour être reçu périodiquement pour chaque port de communication n'est pas reçu pendant une certaine période de temps,

chaque appareil de transfert présente des moyens de désactivation (103) pour désactiver des informations de priorité de la source de temps conservée dans le port de communication dans un cas où la temporisation du message de notification de temps ne survient pas a changé dans un état dans lequel la temporisation du message de notification de temps est survenue,

l'appareil de transfert qui est asservi s'arrête pendant une certaine période de réception de temps du message de notification de temps reçu en provenance de l'appareil maître, et de délivrance du message de notification de temps reçu dans un cas dans lequel les informations de priorité de l'appareil maître ont changé d'un état dans lequel une priorité est élevée à un état bas,

l'appareil asservi désactive les informations de réception et de priorité en provenance de l'appareil maître dans un cas où un état dans lequel la temporisation du message de notification de temps ne survient pas à l'état dans lequel une temporisation est survenue, et

chaque appareil sélectionne à nouveau la source de temps avec les informations les plus prioritaires, et commute la source de temps.

8. Système de synchronisation temporelle selon la revendication 6 ou la revendication 7, dans lequel un intervalle de transmission du message de notification de source de temps durant lequel chaque appareil de transfert transmet est plus court qu'un intervalle durant lequel l'appareil maître délivre le message de notification de temps.

9. Système de synchronisation temporelle selon la revendication 8, dans lequel un intervalle de transmission du message de notification de source de temps que chaque appareil de transfert transmet est un temps inférieur ou égal à un intervalle pendant lequel l'appareil maître délivre le message de notification de temps divisé par des étapes maximales supprimées lors de la délivrance d'informations dans le système de synchronisation de temps.

24

# Fig. 1

10: TRANSFER APPARATUS

```
┌─────────────────┐              ┌─────────────────┐
│        1        │              │        2        │
│    PROCESSOR    │──────────────│     MEMORY      │
└─────────────────┘       │      └─────────────────┘
                          │
                          │ 3
┌─────────────────────────┴──────────────────────────────────────┐
│              ARITHMETIC UNIT (PROCESSOR)                        │
│  ┌──────────────┐ ┌──────────────┐ ┌──────────────┐ ┌──────────────┐ │
│  │      4       │ │      5       │ │      6       │ │      7       │ │
│  │  ARITHMETIC  │ │  ARITHMETIC  │ │    FRAME     │ │    FRAME     │ │
│  │ CIRCUIT FOR  │ │   CIRCUIT    │ │  RECEPTION   │ │ TRANSMISSION │ │
│  │     TIME     │ │  FOR LAYER 2 │ │   PROCESS    │ │   PROCESS    │ │
│  │SYNCHRONIZATION│ │TRANSFER AND  │ │  ARITHMETIC  │ │  ARITHMETIC  │ │
│  │              │ │    RELAY     │ │   CIRCUIT    │ │   CIRCUIT    │ │
│  └──────┬───────┘ └──────┬───────┘ └──────────────┘ └──────┬───────┘ │
└─────────┼────────────────┼──────────────────────────────────┼───────┘
          │                │                                  │
    8-1   │          8-2   │                            8-n   │
┌─────────┴────────┐ ┌─────┴──────────┐          ┌────────────┴─────┐
│  FRAME INPUT/    │ │  FRAME INPUT/  │ ● ● ●    │  FRAME INPUT/    │
│OUTPUT INTERFACE  │ │OUTPUT INTERFACE│          │ OUTPUT INTERFACE │
└──────────────────┘ └────────────────┘          └──────────────────┘
```

EP 4 418 602 B1

## Fig. 2

10: TRANSFER APPARATUS

FRAME RECEPTION

FRAME TRANSMISSION

**101 Pdelay MESSAGE RECEPTION PROCESS**

**105 DELAY MEASUREMENT ARITHMETIC PROCESS**

**108 FRAME TRANSMISSION PROCESS**

**102 Sync/follow up MESSAGE RECEPTION PROCESS**

**106 TIME SYNCHRONIZATION ARITHMETIC PROCESS**

**104 Sync RECEPTION /TRANSMISSION GUARD MANAGEMENT PROCESS**

**103 Announce MESSAGE RECEPTION PROCESS**

**107 TIME SELECTION ARITHMETIC PROCESS**

PORT # 1
PORT # 2
PORT # n

PORT # 1
PORT # 2
PORT # n

1A / n
2A / n
3A / n
3B / n
2B / n
4A / n
4B / n
5A
5B
5C / n
8A / n
6A / n
8B / n
8C / n
7A
7B / n
2B / n
3C / n

EP 4 418 602 B1

# Fig. 3

| OUTPUT INFORMATION | CONTENT | OUTPUT INFORMATION | CONTENT |
|---|---|---|---|
| OUTPUT INFORMATION 1A | Pdelay RECEPTION NOTIFICATION / RECEPTION PARAMETER / RECEPTION TIME STAMP VALUE / RECEPTION STATE, | OUTPUT INFORMATION 6A | Sync/Follow_up TRANSMISSION REQUEST / TRANSMISSION PARAMETER |
| OUTPUT INFORMATION 2A | Sync/Follow_up RECEPTION PARAMETER / TIME STAMP / RECEPTION STATE | OUTPUT INFORMATION 7A | BMCA STATE |
| OUTPUT INFORMATION 2B | Sync/Follow_up TIME OUT | OUTPUT INFORMATION 7B | BMCA STATE / Announce TRANSMISSION PARAMETER |
| OUTPUT INFORMATION 3A | Announce RECEPTION STATE | OUTPUT INFORMATION 8A | TRANSMISSION TIME STAMP |
| OUTPUT INFORMATION 3B | Announce RECEPTION PARAMETER | OUTPUT INFORMATION 8B | TRANSMISSION TIME STAMP |
| OUTPUT INFORMATION 3C | Announce NEW RECEPTION | OUTPUT INFORMATION 8C | Announce TRANSMISSION TIMING |
| OUTPUT INFORMATION 4A | Sync/Follow_up RECEPTION GUARD | | |
| OUTPUT INFORMATION 4B | Sync/Follow_up TRANSMISSION GUARD | | |
| OUTPUT INFORMATION 5A | PROPAGATION DELAY TIME / CLOCK RATIO | | |
| OUTPUT INFORMATION 5B | MEASUREMENT STATE | | |
| OUTPUT INFORMATION 5C | Pdelay TRANSMISSION REQUEST / TRANSMISSION PARAMETER, | | |

EP 4 418 602 B1

# Fig. 4

FORMAT OF PTP FRAME

| MAC HEADER<br>14 BYTES | PTP HEADER<br>34 BYTES | PTP PAYLOAD<br>(INCLUDING TLV) | FCS<br>4 BYTES |
|---|---|---|---|

| MAC DA<br>=0x0180C2<br>00000E | MAC SA<br>6 BYTES | ETHER<br>TYPE<br>=0x88F7<br>(PTP) |
|---|---|---|

# Fig. 5

```
        ┌─────────────────────┐
        │  RECEIVE Announce   │
        └─────────────────────┘
                   │
                   ▼
             ╱────────────╲  S101
           ╱ Sync TIME OUT  ╲        YES
           ╲  OCCURRED?     ╱ ────────────────────────────────────┐
             ╲────────────╱                                        │
                   │ NO                                            │
                   ▼                      S107                     │
             ╱────────────╲  S102    ┌──────────────────────┐      │
           ╱   Announce    ╲   YES   │ REGISTER (UPDATE) Sync│      │
           ╲   DISABLED?   ╱ ──────> │  RECEPTION TIME       │      │
             ╲────────────╱          └──────────────────────┘      │
                   │ NO                        │                    │
                   ▼                           └──────────────┐     │
             ╱────────────╲  S103                             ▼     ▼
           ╱    CLOCK      ╲                            S105
          ╱ INFORMATION     ╲      NO       ┌────────────────────────────────────┐
          ╲ (PRIORITY VECTOR)╱ ───────────> │       Announce ENABLED             │
           ╲ DETERIORATED ? ╱               │ REGISTER (UPDATE) Announce          │
             ╲────────────╱                 │   RECEPTION PARAMETER               │
                   │                        │ REGISTER (UPDATE) Announce          │
                   │ YES                    │   RECEPTION TIME                    │
                   ▼                        └────────────────────────────────────┘
            S104                                        │
    ┌──────────────────────────┐                       ▼  S106
    │ ENABLE Sync/Follow up    │          ┌──────────────────────────────┐
    │ RECEPTION GUARD          │          │ DISABLE Sync/Follow up       │
    └──────────────────────────┘          │ RECEPTION GUARD              │
                   │                       └──────────────────────────────┘
                   │◄──────────────────────────────┘
                   ▼
            ┌──────────┐
            │   END    │
            └──────────┘
```

# Fig. 6

<table>
<tr><td colspan="2" rowspan="2">PRIORITY VECTOR</td><td>SIZE</td><td rowspan="2">CONTENT</td><td rowspan="2">PRIORITY</td></tr>
<tr><td>(OCTETS)</td></tr>
<tr><td rowspan="6">rootSystemIdentity (14 OCTETS)</td><td>priority 1</td><td>1</td><td>PRIORITY 1 AS GRANDMASTER</td><td rowspan="6">HIGH ⇧</td></tr>
<tr><td>clockClass</td><td>1</td><td>GRANDMASTER CLOCK CLASS</td></tr>
<tr><td>clockAccuracy</td><td>1</td><td>GRANDMASTER CLOCK ACCURACY</td></tr>
<tr><td>offsetScaledLogVariance</td><td>2</td><td>SAFETY OF GRANDMASTER CLOCK (VARIANCE, DISTRIBUTION)</td></tr>
<tr><td>priority 2</td><td>1</td><td>PRIORITY 2 AS GRANDMASTER</td></tr>
<tr><td>clockIdentity</td><td>8</td><td>GRANDMASTER CLOCK ATTRIBUTE</td></tr>
<tr><td colspan="2">stepsRemoved</td><td>2</td><td>THE NUMBER OF RELAYED STEPS FROM CLOCK MASTER (+1 EACH TIME RELAYED)</td><td></td></tr>
<tr><td rowspan="2">sourcePortIdentity (10 OCTETS)</td><td>portIdentity. clockIdentity</td><td>8</td><td>CLOCK ATTRIBUTE OF TRANSMISSION SOURCE</td><td></td></tr>
<tr><td>portIdentity. portNumber</td><td>2</td><td>PORT NUMBER OF TRANSMISSION SOURCE</td></tr>
<tr><td colspan="2">portNumber</td><td>2</td><td>RECEPTION PORT NUMBER</td><td>LOW ⇩</td></tr>
<tr><td colspan="2"></td><td>TOTAL 28</td><td></td><td></td></tr>
</table>

MOST SIGNIFICANT, PROPAGATED VIA ANNOUNCE MESSAGES

LOCAL SIGNIFICANT, TIE-BREAKER

COMPARE FROM PARAMETER WITH HIGH PRIORITY AND SELECT PARAMETER WITH SMALLER VALUE

EP 4 418 602 B1

Fig. 7

RECEIVE Sync+Follow up

S201 Sync/Follow up RECEPTION GUARD ENABLED? — YES → S207 DISCARD

NO

S202 REGISTER (UPDATE) Sync RECEPTION TIME

S203 RECEIVED IN SLAVE PORT? — NO →

YES

S204 SYNCHRONIZE (UPDATE) TIME OF APPARATUS WITH TIME OF MASTER APPARATUS

PROCESS IN EACH MASTER PORT

S205 HAS ANY ONE OF DETERIORATION OF PRIORITY INFORMATION OF MASTER APPARATUS, DISABLING OF Announce, OR CHANGE IN SLAVE PORT OCCURRED IN TRANSMISSION TARGET PORT AFTER PREVIOUS Announce TRANSMISSION? — YES

NO

S206 REFLECT ARITHMETIC RESULT TO Sync/Follow up RECEIVED AND TRANSFER TO TRANSMISSION TARGET PORT

END

EP 4 418 602 B1

## Fig. 8

EP 4 418 602 B1

# Fig. 9

EP 4 418 602 B1

Fig. 10

Fig. 11

**Fig. 12**

IN A CASE WHERE Announce CYCLE = Sync CYCLE

GM a · TRANSFER APPARATUS a · TRANSFER APPARATUS b · TRANSFER APPARATUS c · TRANSFER APPARATUS d · GM b

TIME (t)

MAXIMUM NOTIFICATION TIME OF Announce INFORMATION: Announce CYCLE × STEPS REMOVED

A (1), S/F (1), A (2), S/F (2), A (3), S/F (3), A (4), S/F (4), A (5), S/F (5), A (6), S/F (6), A (7), S/F (7), A (8), S/F (8)

EP 4 418 602 B1

Fig. 13

IN A CASE WHERE Announce CYCLE = Sync CYCLE/ STEPS REMOVED

GM a | TRANSFER APPARATUS a | TRANSFER APPARATUS b | TRANSFER APPARATUS c | TRANSFER APPARATUS d

Announce MAXIMUM NOTIFICATION TIME :
Announce CYCLE × STEPS REMOVED = Sync CYCLE

TIME (t)

A (1)-1
A (1)-2
A (1)-3
A (1)-4
S/F (1)
A (2)-1
A (2)-2
A (2)-2
A (2)-3
A (2)-4
S/F (2)
A (3)-1
A (3)-2
A (3)-3
A (3)-4
S/F (3)
A (4)-1
A (4)-2
A (4)-3
A (4)-4
S/F (4)

A (1)-1
A (1)-2
A (1)-3
S/F (1)
A (1)-4
A (2)-1
A (2)-2
A (2)-3
S/F (2)
A (2)-4
A (3)-1
A (3)-2
A (3)-3
S/F (3)
A (3)-4
A (4)-1
A (4)-2
A (4)-3
S/F (4)
A (4)-4

A (1)-1
A (1)-2
A (1)-3
S/F (1)
A (1)-4
A (2)-1
A (2)-2
A (2)-3
S/F (2)
A (2)-4
A (3)-1
A (3)-2
A (3)-3
S/F (3)
A (3)-4
A (4)-1
A (4)-2
A (4)-3
S/F (4)
A (4)-4

A (1)-1
A (1)-2
A (1)-3
S/F (1)
A (1)-4
A (2)-1
A (2)-2
A (2)-3
S/F (2)
A (2)-4
A (3)-1
A (3)-2
A (3)-3
S/F (3)
A (3)-4
A (4)-1
A (4)-2
A (4)-3
S/F (4)
A (4)-4

EP 4 418 602 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 102158335 B
- US 2016149692 A1
- EP 3703286 A1
- JP 2015216438 A

### Non-patent literature cited in the description

- An efficient method of reselecting Grand Master in IEEE 802.1AS. **JEON YOUNGHWAN et al.** THE 20TH ASIA-PACIFIC CONFERENCE ON COMMUNICATION (APCC2014). IEEE, 01 October 2014, 303-308
- Timing and Synchronization for Time-Sensitive Applications. *IEEE Std 802.1AS-2020*, 30 January 2020